# EUROPÄISCHE PATENTSCHRIFT

(11) **EP 4 163 193 B1**
(45) Veröffentlichungstag und Bekanntmachung des Hinweises auf die Patenterteilung: **10.06.2026**
(21) Anmeldenummer: 22199643.2
(22) Anmeldetag: 04.10.2022
(51) Int. Cl.: B62D 25/08, B62D 19/00

(54) **VORBAUSTRUKTUR FÜR EIN KRAFTFAHRZEUG MIT EINER HINTER EINEM KÜHLMODUL ANGEORDNETEN CRASH-STRUKTUR**
FRONT STRUCTURE FOR A MOTOR VEHICLE WITH A CRASH STRUCTURE ARRANGED BEHIND A COOLING MODULE
STRUCTURE AVANT POUR UN VÉHICULE AUTOMOBILE AVEC UNE STRUCTURE DE COLLISION DISPOSÉE DERRIÈRE UN MODULE DE REFROIDISSEMENT

(30) Priorität: 11.10.2021 DE 102021126297
(43) Veröffentlichungstag der Anmeldung: 12.04.2023
(73) Patentinhaber: MAN Truck & Bus SE, 80995 München (DE)
(72) Erfinder: Kondic, Darko, 80995 München (DE); Kusch, Willi, 88239 Wangen im Allgäu (DE); Schmitz, Andreas, 80995 München (DE); Wick, Michael, 80995 München (DE); Knyrim, Thomas, 80995 München (DE); Wilke, Florian, 80995 München (DE)
(74) Vertreter: v. Bezold & Partner Patentanwälte - PartG mbB

(56) Entgegenhaltungen:
- EP-A1- 2 138 381
- FR-A1- 2 841 863
- JP-A- 2008 195 094
- US-A1- 2005 046 165

## Beschreibung

Die Erfindung betrifft eine Vorbaustruktur für ein Kraftfahrzeug sowie ein Kraftfahrzeug mit einer ebensolchen Vorbaustruktur.

Zum allgemeinen Stand der Technik kann auf die FR 2 841 863 A1, JP 2008-195094 A und US 2005/046165 A1 verwiesen werden.

Die FR 2 841 863 A1 offenbart dabei eine Fahrzeugfront, umfassend mindestens zwei im Wesentlichen vertikale Streben und Verbindungselemente zwischen den Streben, die so angeordnet sind, dass sie einen Raum begrenzen, der eine oder mehrere Einrichtungen des Fahrzeugs aufnehmen kann. Dieser Raum weist eine Öffnung auf, die sich zwischen den oberen Enden der Schenkel befindet, was den direkten Zugang zu der oder den Einrichtungen zumindest in vertikaler Richtung ermöglicht.

Die JP 2008-195094 A offenbart eine untere Kühlerhalterung, die an der Vorderseite einer Fahrzeugkarosserie von einem vorderen Seitenteil eines Hilfsrahmens vorsteht. Der Hilfsrahmen ist hierbei unterhalb eines vorderen Seitenrahmen abgestützt, um den unteren Teil eines Kühlers zu stützen. Dies ermöglicht, dass eine in die untere Kühlerhalterung eingebrachte Aufpralllast von dem vorderen Seitenteil direkt auf den Hilfsrahmen übertragen werden kann, um die Aufpralldämpfung zu verbessern.

Die US 2005/046165 A1 offenbart eine Karosseriestruktur für ein Fahrzeug, aufweisend vordere Oberteile und vordere Seitenteile, die sich seitlich innerhalb der vorderen Oberteile befinden. Die vorderen Oberteile und vorderen Seitenteile sind mit rohrförmigen Verbindungselementen verbunden. Ein erster Endabschnitt jedes Verbindungselements erstreckt sich durch das vordere Seitenteil und ist an beiden Seiten des Seitenteils angeschweißt. Die Verbindung weist eine hohe Steifigkeit auf. Wenn Aufprallenergie auf einen der beiden vorderen Oberteile einwirkt, wird die Energie über das Verbindungselement auf das vordere Seitenteil übertragen, und das vordere Seitenteil und das vordere Oberteil werden plastisch verformt.

Das Dokument EP-A-2138381 offenbart ein Nutzfahrzeug gemäß dem Oberbegriff des Anspruchs 1.

Im Stand der Technik sind zumindest teilweise batterieelektrisch angetriebene Kraftfahrzeuge allgemein bekannt. Derartige Fahrzeuge verfügen dabei in der Regel über mindestens ein Batteriemodul, um mittels der dort gespeicherten bzw. speicherbaren elektrischen Energie die Antriebsaggregate der entsprechenden Kraftfahrzeuge anzutreiben. Ein solches Batteriemodul weist üblicherweise mehrere Batteriezellen (z. B. Lithium-Ionen-Batteriezellen) auf, die miteinander zu einer Hochvolt- bzw. Traktions-Batterie elektrisch verbunden sind.

Um im Falle eines Crash-Ereignisses die Fahrzeuginsassen und/oder Rettungskräfte z. B. vor einer Gefährdung durch Stromschlag zu schützen, besteht ein Bedarf an einer möglichst robusten Lagerung, welche die in der Traktionsbatterie enthaltenen Batteriezellen möglichst zuverlässig vor Beschädigungen bewahrt. Dies ist bei der Verwendung von Lithium-Ionen-Batteriezellen besonders relevant, da diese zumeist entflammbare Elektrolyten enthalten, die bei einem Fahrzeugcrash freigesetzt und durch Funken oder Lichtbögen entzündet werden könnten, was z. B. für einen im Fahrzeug eingeklemmten Insassen unter Umständen lebensgefährlich sein kann.

Im Fall von batterieelektrisch angetriebenen Nutzfahrzeugen, wie z. B. Sattelzugmaschinen, ist eine mögliche Stelle zur Anordnung der Hochvolt-Batterie unter dem Fahrerhaus zwischen den Rahmen-Längsträgern des, im Nutzfahrzeugbereich üblicherweise verwendeten, Leiterrahmens des Fahrgestells. Problematisch daran ist, dass die Batteriekomponenten hierbei oftmals nicht ausreichend gegen crashbedingte Beschädigungen im Fall eines Auffahrens des Nutzfahrzeugs auf einen vorausfahrenden bzw. stehenden Trailer geschützt sind, da die Unterkante des Hecks des Trailers nicht selten über dem Leiterrahmenniveau des Nutzfahrzeugs liegt. Folglich besteht hier ein Bedarf an einem Fahrzeugentwurf, welcher einen sicheren Crash- bzw. Auffahrschutz bietet und mit dem vorzugsweise die Nachteile herkömmlicher Techniken vermieden werden können.

Aufgabe der Erfindung ist es, eine derartige Lösung bereitzustellen. Insbesondere ist es dabei eine Aufgabe der Erfindung, eine verbesserte Technik zum Schutz von Fahrzeugkomponenten bei einem crashbedingten Auffahren eines Nutzfahrzeugs auf ein vorausfahrendes Fahrzeug bereitzustellen.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Lösungsansatz wird hierbei eine Vorbaustruktur für ein Kraftfahrzeug bereitgestellt. Bevorzugt handelt es sich bei der Vorbaustruktur um eine Vorbaustruktur für ein Nutzfahrzeug (z. B. eine Vorbaustruktur für einen Omnibus, einen Lastkraftwagen oder eine Sattelzugmaschine).

Die Vorbaustruktur weist zwei, vorzugsweise parallele, Rahmen-Längsträger (z. B. C-Profilträger) mit je einem vorderen Ende auf. Zur besseren Unterscheidung können die zwei Rahmen-Längsträger im Folgenden auch als erster und zweiter Rahmen-Längsträger bezeichnet werden. Entsprechend kann das vordere Ende des ersten Rahmen-Längsträgers auch als erstes vorderes Rahmen-Längsträgerende und/oder das vordere Ende des zweiten Rahmen-Längsträgers als zweites vorderes Rahmen-Längsträgerende bezeichnet werden.

Vorzugsweise umfasst die Vorbaustruktur ein Kühlmodul, das an den jeweiligen vorderen Enden der Rahmen-Längsträger gelagert ist. Das, vorzugsweise vorfertigbare bzw. vormontierbare, Kühlmodul kann somit am ersten und zweiten vorderen Rahmen-Längsträgerende gelagert (z. B. angeschraubt) sein. Ferner kann sich das Kühlmodul quer zu den Rahmen-Längsträgern erstrecken. Beispielsweise kann das Kühlmodul senkrecht zum ersten und zweiten Rahmen-Längsträger orientiert sein.

Weiterhin umfasst die Vorbaustruktur eine Crash-Struktur, die bei einem, vorzugsweise vorbestimmten, Aufprallereignis (z. B. bei einem Frontalaufprall) unter Abbau von Aufprallkräften deformierbar ist. Unter dem Ausdruck "Crash-Struktur" kann dabei bevorzugt ein Bauteil (oder eine Baugruppe) verstanden werden, dessen (deren) vorrangiger oder ausschließlicher Zweck die gezielte Absorption von Aufprallenergien im Falle eines Crashs (z. B. durch ein Umwandeln in Verformungsarbeit) ist. Die, vorzugsweise prellbockförmige, Crash-Struktur soll sich dabei oberhalb und quer zu den Rahmen-Längsträgern erstrecken. Bevorzugt kann die Crash-Struktur somit ähnlich einem auf Schienen gelagerten Prellbock auf den beiden Rahmen-Längsträgern abgestützt sein, vorzugsweise um dadurch hinter der Crash-Struktur liegende Komponenten (z. B. eine Hochvoltbatterie) im Falle des Aufprallereignisses zu schützen. Lediglich beispielhaft kann die Crash-Struktur dazu eine, vorzugsweise im Wesentlichen senkrecht zum ersten und zweiten Rahmen-Längsträger orientierte, Crash-Strebe (z. B. ein Hohlprofil) umfassen, die mittels zweiter Aufnahmeelemente an den jeweiligen Rahmen-Längsträgern gehaltert ist. Bevorzugt ist vorgehen, das die vorgenannte Crash-Struktur hinter dem Kühlmodul angeordnet ist. Dabei kann sich der Ausdruck "hinter" bevorzugt auf die übliche Bedeutung dieses Begriffs bei einer Vorbaustruktur, die im vorderen Bereich (Frontbereich) des Kraftfahrzeugs angeordnet wird, beziehen, d. h., dass die Crash-Struktur bezüglich der Vorwärtsfahrtrichtung des Kraftfahrzeugs (mit montierter Vorbaustruktur) hinter dem Kühlmodul angeordnet sein kann. Mit anderen Worten kann die Crash-Struktur näher an einem, dem vorgenannten ersten vorderen Ende des ersten Rahmen-Längsträgers gegenüberliegenden, ersten hinteren Ende des ersten Rahmen-Längsträgers angeordnet sein als das Kühlmodul. Beispielsweise kann die Crash-Struktur benachbart zu einer den (ersten und zweiten) Rahmen-Längsträgern zugewandten Seite des Kühlmoduls angeordnet sein. Bevorzugt ist die Crash-Struktur hierbei unmittelbar hinter dem Kühlmodul angeordnet, d. h., dass vorzugsweise keine weiteren Fahrzeugkomponenten (wie z. B. ein Motor, Druckluftanlage, etc.) zwischen der Crash-Struktur und dem Kühlmodul angeordnet sind. Auf vorteilhafte Weise kann dadurch insgesamt ein möglichst zuverlässiger Schutz für hinter der Crash-Struktur befindliche Fahrzeugkomponenten (wie z. B. eine Traktionsbatterie) bereitgestellt werden. Insbesondere kann dadurch auf vorteilhafte Weise bei einem Frontalaufprall des Kraftfahrzeugs auf einen (z. B. vorausfahrenden) Trailer, dessen Intrusion in das Kraftfahrzeug reduziert werden.

Nach einem ersten Aspekt kann das Kühlmodul einen oberen Kühlmodulbereich aufweisen, der oberhalb der Rahmen-Längsträger angeordnet ist. Mit anderen Worten kann sich das Kühlmodul zumindest bereichsweise bezüglich einer Hochachse der Vorbaustruktur oberhalb der zwei Rahmen-Längsträger erstrecken. Als Hochachse der Vorbaustruktur kann dabei bevorzugt eine Achse eines (z. B. vorbaufesten) Koordinatensystems verstanden werden, die senkrecht zu einem, vorzugsweise beiden, Rahmen-Längsträger verläuft und in der, vorzugsweise mittig zwischen den zwei Rahmen-Längsträgern verlaufende, Vorbaumittelebene liegt. Aufgrund der vorbestimmten Einbaulage der Vorbaustruktur im Kraftfahrzeug kann die Hochachse (im montierten Zustand) auch der Gierachse des Kraftfahrzeugs entsprechen und/oder entgegen der Schwerkraftrichtung orientiert sein. Weiterhin kann vorgesehen sein, dass die Crash-Struktur zumindest teilweise auf Höhe des oberen Kühlmodulbereichs angeordnet ist. Bevorzugt kann sich die Crash-Struktur somit zumindest abschnittsweise auf derselben Höhe wie der obere Kühlmodulbereich befinden. Auf vorteilhafte Weise kann dadurch ein zuverlässiger Schutz bei einem Frontalaufprall des Kraftfahrzeugs auf einen (z. B. vorausfahrenden) Sattelauflieger ermöglicht werden.

Gemäß einem weiteren Aspekt kann das Kühlmodul zumindest einen, vorzugsweise quaderförmigen, Kühler (z. B. einen Ladeluftkühler, Wasserkühler, etc.) aufweisen. Der zumindest eine Kühler kann dabei von einem, vorzugsweise gasförmigen und/oder flüssigen, Wärmeträger durchströmbar sein. Der zumindest eine Kühler kann somit z. B. an einen Kühl- und/oder Kältemittelkreislauf des Kraftfahrzeugs anschließbar sein. Zudem oder alternativ kann der zumindest eine Kühler senkrecht zu den zwei Rahmen-Längsträgern orientiert sein. D. h. der zumindest eine Kühler kann somit senkrecht zum ersten und zweiten Rahmen-Längsträger orientiert angeordnet sein. Zudem oder alternativ kann der zumindest eine Kühler einen Ladeluftkühler und/oder einen Kühlmittelkühler umfassen. Zudem oder alternativ kann der zumindest eine Kühler einen vorderen ersten Kühler und einen, vorzugsweise planparallel zum ersten Kühler angeordneten, hinteren zweiten Kühler umfassen.

Nach einem weiteren Aspekt kann die Vorbaustruktur eine Hochvoltkomponente für einen batterieelektrischen Antrieb des Kraftfahrzeugs aufweisen. Lediglich beispielhaft kann die Hochvoltkomponente eine Traktionsbatterie und/oder einen Inverter umfassen. Bevorzugt weist die Traktionsbatterie, die auch als Antriebsbatterie oder Hochvoltspeicher bezeichnet werden kann, dabei eine Gleichspannung zwischen 60 V und 1,5 kV, vorzugsweise zwischen 200 V und 800 V, besonders bevorzugt zwischen 350 V und 400 Volt auf. Die vorgenannte Hochvoltkomponente kann hierbei, vorzugsweise unmittelbar, hinter der Crash-Struktur angeordnet sein. Mit anderen Worten kann die Hochvoltkomponente näher an einem, dem vorgenannten zweiten vorderen Ende des zweiten Rahmen-Längsträgers gegenüberliegenden, zweiten hinteren Ende des zweiten Rahmen-Längsträgers angeordnet sein als die Crash-Struktur. Bevorzugt befinden sich zwischen der Crash-Struktur und der Hochvoltkomponente keine weiteren Fahrzeugkomponenten. Weiterhin kann die Hochvoltkomponente einen oberen Hochvoltkomponentenbereich aufweisen, der oberhalb der Rahmen-Längsträger, vorzugsweise zumindest abschnittsweise auf derselben Höhe wie die Crash-Struktur, angeordnet ist. Bevorzugt ist vorgesehen, dass die Crash-Struktur hierbei eine Crash-Struktur zum Schutz der Hochvoltkomponente bei einem Frontalaufprall des Kraftfahrzeugs auf einen Sattelauflieger (z. B. bei einem Frontalaufprall des Kraftfahrzeugs auf ein Heck eines Sattelaufliegers) ist. Dies kann z. B. über die Montagehöhe der Crash-Struktur erreicht werden, da Sattelauflieger bzw. deren Heckbereich in der Regel genormte Höhen aufweisen (z. B. Ladekanten typischerweise zwischen 1 und 1,5 m). Auf vorteilhafte Weise kann dadurch insgesamt ein sicherer Schutz der Hochvoltkomponente ermöglicht werden.

Nach einem weiteren Aspekt kann die Crash-Struktur zwei, vorzugsweise spiegelbildlich zueinander ausgeführte, Aufnahmeelemente umfassen. Zur besseren Unterscheidung können die beiden Aufnahmeelemente auch als erstes und zweites Aufnahmeelement bezeichnet werden. Die Aufnahmeelemente (welche jeweils z. B. in Form einer Konsole und/oder Kassette ausgeführt sein können) können dabei jeweils an einem der Rahmen-Längsträger befestigt sein. Beispielsweise kann das erste Aufnahmeelement mit dem ersten Rahmen-Längsträger verbunden sein und/oder das zweite Aufnahmeelement mit dem zweiten Rahmen-Längsträger verbunden sein. Vorzugsweise sind die beiden Aufnahmeelemente somit parallel zueinander orientiert.

Zudem oder alternativ kann die Crash-Struktur auch eine, vorzugsweise gekrümmte, Crash-Strebe (z. B. ein Hohlprofil) aufweisen, welche im Folgenden zur besseren Unterscheidbarkeit auch als erste Crash-Strebe bezeichnet werden kann. Die erste Crash-Strebe kann dabei zwei, vorzugsweise einander gegenüberliegende, Endbereiche umfassen, wobei die Endbereiche jeweils in einem der zwei Aufnahmeelemente aufgenommen (z. B. angeschraubt und/oder eingesteckt) sind. D. h. die erste Crash-Strebe kann somit z. B. einen ersten Endbereich umfassen, der im ersten Aufnahmeelement aufgenommen sein kann und einen zweiten Endbereich umfassen, der im zweiten Aufnahmeelement aufgenommen sein kann. Vorzugsweise wird die erste Crash-Strebe mittels der beiden Aufnahmeelemente somit oberhalb und/oder quer zu den Rahmen-Längsträgern gehalten. Besonders bevorzugt wird die erste Crash-Strebe mittels der beiden Aufnahmeelemente dabei bezüglich einer Hochachse der Vorbaustruktur beabstandet von den Rahmen-Längsträgern (z. B. deren jeweiligen Oberkanten) gehalten. Auf vorteilhafte Weise kann so wiederum ein zuverlässiger Schutz von hinter der Crash-Struktur angeordnete Fahrzeugkomponenten (z. B. eine Traktionsbatterie) im Falle eines Frontalaufpralls des Kraftfahrzeugs, z. B. im Falle eines Frontalaufpralls auf einen vorausfahrenden Sattelauflieger, ermöglicht werden.

Gemäß einem weiteren Aspekt kann die erste Crash-Strebe als Hohlprofil (z. B. als quadratisches Hohlprofil) ausgeführt sein. D. h. die erste Crash-Strebe kann bevorzugt als ein rohrförmiges Profil mit konzentrischem, rechteckigem, ovalem oder anderem geschlossenen Querschnitt ausgeführt sein. Lediglich beispielhaft kann die erste Crash-Strebe aus Stahl und/oder aus kohlenstofffaserverstärkter Kunststoff (CFK) bestehen. Zudem oder alternativ kann die erste Crash-Strebe gekrümmt (z. B. gebogen) ausgeführt sein. Vorzugsweise ist die erste Crash-Strebe dabei zum Kühlmodul hin gekrümmt ausgeführt. Beispielsweise kann dazu ein, zwischen den beiden Endbereichen angeordneter, mittlerer Bereich der (z. B. U-förmigen) ersten Crash-Strebe einen geringeren Abstand zum Kühlmodul aufweisen als die beiden Endbereiche der ersten Crash-Strebe. Mit anderen Worten können z. B. die beiden Endbereiche der erste Crash-Strebe vom Kühlmodul weg, d. h. nach hinten, gebogen sein. Auf vorteilhafte Weise kann dadurch eine möglichst zentrale bzw. mittige Krafteinleitung in die Crash-Strebe erreicht werden.

Nach einem weiteren Aspekt kann zumindest eines, vorzugsweise beide, der Aufnahmeelemente mit der ersten Crash-Strebe verschweißt sein. Zudem oder alternativ kann zumindest eines, vorzugsweise beide, der Aufnahmeelemente zusammen mit der ersten Crash-Strebe eine gemeinsame Schweißbaugruppe bilden. Beispielsweise kann die erste Crash-Strebe (z. B. in Form eines Rohres) in zumindest eines, vorzugsweise beide, der Aufnahmeelemente (z. B. in Form einer Kassette) integriert sein. Auf vorteilhafte Weise kann dadurch eine vorfertigbare bzw. vormontierbare, vorzugsweise selbsttragende, Crash-Struktur bereitgestellt werden, was die Montage der Vorbaustruktur vereinfacht.

Gemäß einem weiteren Aspekt kann zumindest eines, vorzugsweise beide, der Aufnahmeelemente einen Durchgang (z. B. in Form einer Bohrung, Ausnehmung und/oder Ausstanzung) umfassen. Der jeweilige Durchgang kann dabei bevorzugt ein zu einem Außenprofil der ersten Crash-Strebe korrespondierendes Profil aufweisen. D. h. der jeweilige Durchgang kann in Form und Größe an das Außenprofil der ersten Crash-Strebe angepasst sein. Beispielsweise kann der Durchgang ein quadratisches Profil aufweisen, falls die erste Crash-Strebe als Hohlprofil mit quadratischem Querschnitt ausgebildet ist. Weiterhin kann die erste Crash-Strebe, vorzugsweise zumindest abschnittsweise formschlüssig, im jeweiligen Durchgang aufgenommen sein. Auf vorteilhafte Weise kann durch eine Halterung der ersten Crash-Strebe bereitgestellt werden, welche einerseits eine ausreichende Fixierung der ersten Crash-Strebe ermöglicht, zugleich aber eine Bewegung der ersten Crash-Strebe (z. B. infolge einer crashbedingten Spreizung der Strebe) durch den jeweiligen Durchgang nicht zu sehr einschränkt.

Nach einem weiteren Aspekt kann die erste Crash-Strebe in dem Durchgang, vorzugsweise in beiden Durchgängen, verschiebbar geführt sein, um dadurch im Falle einer crashbedingten Verformung (z. B. Spreizung) der ersten Crash-Strebe eine Ausgleichsbewegung der ersten Crash-Strebe zu ermöglichen. Bevorzugt handelt es sich bei der Ausgleichsbewegung dabei um eine Ausgleichsbewegung quer (z. B. senkrecht) zu den Rahmen-Längsträgern. Als Ausgleichsbewegung kann dabei bevorzugt eine Bewegung der ersten Crash-Strebe verstanden werden, welche die Lagerung bzw. Halterung der ersten Crash-Strebe vor zu starken Belastungen schützen soll, um dadurch auf vorteilhafte Weise z. B. ein Ausbrechen während des Aufprallereignisses zu verhindern. Zudem oder alternativ kann zwischen der ersten Crash-Strebe und dem (jeweiligen) Durchgang ein Spiel bestehen und/oder die erste Crash-Strebe schwimmend an zumindest einem der Aufnahmeelemente gelagert sein. Insgesamt kann dadurch erreicht werden, dass die Aufprallenergie im Falle eines Crashs vorrangig in die Verformung der ersten Crash-Strebe umgesetzt wird.

Gemäß einem weiteren Aspekt kann zumindest ein Aufnahmeelement, vorzugsweise jedes der Aufnahmeelemente, ein nach oben geöffnetes U-Profil umfassen. Das U-Profil kann dabei zwei planparallele Trägerschenkel und einen die Trägerschenkel miteinander verbindenden Mittelteil aufweisen. Bevorzugt liegt der Mittelteil auf einem der Rahmen-Längsträger (z. B. auf dessen Oberkante) auf. Das U-Profil kann dabei einteilig ausgebildet sein oder z. B. durch zwei miteinander verbundene L-Profilteile gebildet werden. Weiterhin kann jeder der zwei Trägerschenkel jeweils eine Öffnung (z. B. in Form einer Bohrung, Ausnehmung und/oder Ausstanzung) aufweisen, wobei die jeweiligen Öffnungen der Trägerschenkel den vorgenannten Durchgang des zumindest einen Aufnahmeelements bilden können. Bevorzugt sind die entsprechenden Öffnungen der Trägerschenkel dazu miteinander fluchtend. Auf vorteilhafte Weise kann durch eine stabile Lagerung der ersten Crash-Strebe erreicht werden, während gleichzeitig im Crashfall ein, vorzugsweise seitliches, "Durchtauchen" bzw. "Durchschieben" der ersten Crash-Strebe durch den entsprechenden Durchgang ermöglicht wird.

Nach einem weiteren Aspekt kann zumindest ein Aufnahmeelement, vorzugsweise jedes der Aufnahmeelemente, eine einseitig offene Kassette umfassen. Bevorzugt ist die Kassette dabei auf einer dem Kühlmodul zugewandten Seite, d. h. vorzugsweise nach vorne hin, offen. Als "Kassette" kann in diesem Zusammenhang vorzugsweise eine kastenförmige (z. B. aus Stahl gefertigte) Haltestruktur für die erste Crash-Strebe verstanden werden. Die Kassette kann ferner zwei planparallele Seitenteile umfassen, die jeweils eine Öffnung aufweisen können. Die jeweiligen Öffnungen der Seitenteile können dabei den Durchgang des zumindest einen Aufnahmeelements bilden. Bevorzugt sind auch hier die entsprechenden Öffnungen der Seitenteile miteinander fluchtend. Auch durch diese Ausführung kann auf vorteilhafte Weise eine stabile Lagerung der ersten Crash-Strebe erreicht werden, während gleichzeitig im Crashfall ein, vorzugsweise seitliches, "Durchtauchen" bzw. "Durchschieben" der ersten Crash-Strebe durch den entsprechenden Durchgang ermöglicht wird.

Gemäß einem weiteren Aspekt kann zumindest eines der Aufnahmeelemente, vorzugsweise jedes der Aufnahmeelemente, eine Abstufung aufweisen. Bevorzugt ist diese jeweilige Abstufung dabei auf einer dem Kühlmodul zugewandten Seite, d. h. vorzugsweise vorderen Seite, des entsprechenden Aufnahmeelements angeordnet. Die jeweilige Abstufung kann dabei jeweils durch eine, vorzugsweise waagerechte, Stufenfläche und eine, vorzugsweise vertikale, Stoßfläche gebildet werden. Vorzugsweise liegt die erste Crash-Strebe (z. B. ein quadratisches Hohlprofil) dabei auf der Stufenfläche (z. B. flächig) auf und/oder an der Stoßfläche (z. B. flächig) an. Auf vorteilhafte Weise kann dadurch eine Abstützung der erste Crash-Strebe von hinten und unten erreicht werden, wodurch wiederum eine vorrangige Kraftaufnahme der erste Crash-Strebe entlang der Längsachse der Vorbaustruktur bzw. der Rahmen-Längsträger erreicht werden kann.

Nach einem weiteren Aspekt kann die erste Crash-Strebe (z. B. ein quadratisches Hohlprofil) mittels einer Schraubverbindung an der Stufenfläche des zumindest einen Aufnahmeelements gehalten sein. Beispielsweise kann die erste Crash-Strebe mittels einer die erste Crash-Strebe durchdringenden Schraube an der Stufenfläche verschraubt sein. Zudem oder alternativ kann, falls die erste Crash-Strebe als Hohlprofil ausgebildet ist, auch nur eine auf der Stufenfläche aufliegende Profilseite mit der Stufenfläche verschraubt sein. Weiterhin kann die Schraubverbindung ausgebildet sein, bei einer vorbestimmten crashbedingten Kraftbeaufschlagung zu versagen, um dadurch eine Ausgleichsbewegung der ersten Crash-Strebe, vorzugsweise quer zu den Rahmen-Längsträgern, zu ermöglichen. Zudem oder alternativ kann die Schraubverbindung ein, vorzugsweise quer zu den Rahmen-Längsträgern verlaufendes, Langloch und eine, im Langloch geführte, Schraube umfassen. Dies dient bevorzugt dazu, um im Falle einer crashbedingten Verformung (z. B. Spreizung) der ersten Crash-Strebe eine Ausgleichsbewegung der Crash-Strebe, vorzugsweise quer zu den Rahmen-Längsträgern, zu ermöglichen. Auch durch diese Ausführung kann auf vorteilhafte Weise eine stabile Lagerung der ersten Crash-Strebe erreicht werden, während gleichzeitig im Crashfall ein Bewegungsspielraum für die erste Crash-Strebe besteht, um dadurch die Aufprallenergie vorrangig in die Verformung der ersten Crash-Strebe umzusetzen.

Gemäß einem weiteren Aspekt kann zumindest eines der Aufnahmeelemente Verstärkungsstreben (z. B. Schottbleche) zur Versteifung des zumindest einen Aufnahmeelements umfassen. Beispielsweise kann das zumindest eine Aufnahmeelement hierzu eine Mehrzahl von, vorzugsweise eingeschweißten, Rippen und/oder Schottbleche aufweisen.

Zudem oder alternativ kann zumindest eines der Aufnahmeelemente (z. B. kreisförmige) Aussparungen zur Gewichtsreduktion umfassen. Beispielsweise kann das zumindest eine Aufnahmeelement hierzu eine Mehrzahl von Bohrungen, Löchern und/oder Ausstanzungen aufweisen.

Zudem oder alternativ kann zumindest eines der Aufnahmeelemente eine, vorzugsweise ausgekragte, Trägerplatte umfassen, mittels derer das zumindest eine Aufnahmeelement an einem der Rahmen-Längsträger montiert (z. B. angeschraubt und/oder angenietet) ist. Bevorzugt ist die Trägerplatte dabei seitlich außen am entsprechenden Rahmen-Längsträger montiert.

Zudem oder alternativ kann zumindest eines der Aufnahmeelemente nach hinten, vorzugsweise rampenförmig, abfallend ausgebildet sein. Beispielsweise kann das zumindest eine Aufnahmeelement ausgeführt sein, dass dessen Höhe mit steigendem Abstand vom Kühlmodul abnimmt. Auf vorteilhafte Weise kann dadurch eine sichere und materialsparende Anbringung der Crash-Strebe an die Rahmen-Längsträger bereitgestellt werden.

Zudem oder alternativ kann zumindest eines der Aufnahmeelemente als offenes Profil (z. B. ein C-Profil) ausgebildet sein. Vorzugsweise ist dabei die offene Profilseite des zumindest einen Aufnahmeelements ins Innere der Vorbaustruktur orientiert. Unter dem Ausdruck "ins Innere" kann dabei vorzugsweise in Richtung des zweiten Aufnahmeelements und/oder in Richtung des Zwischenraums zwischen den zwei Rahmen-Längsträgern verstanden werden. In einer besonders bevorzugten Variante sind hierbei beide Aufnahmeelemente jeweils als offene Profile (z. B. ein C-Profil) ausgebildet und vorzugsweise beide mit der ersten Crash-Strebe verschweißt.

Nach einem weiteren Aspekt kann die Crash-Struktur eine weitere Crash-Strebe (z. B. ein Hohlprofil) umfassen, die zur besseren Unterscheidbarkeit im Folgenden auch als "zweite" Crash-Strebe bezeichnet werden kann. Ähnlich der ersten Crash-Strebe kann auch die zweite Crash-Strebe als ein rohrförmiges Profil mit konzentrischem, rechteckigem, ovalem oder anderem geschlossenen Querschnitt ausgeführt sein. Ferner kann auch die zweite Crash-Strebe z. B. aus Stahl und/oder aus kohlenstofffaserverstärkter Kunststoff (CFK) bestehen. Bevorzugt ist die zweite Crash-Strebe (z. B. zum Kühlmodul hin) gekrümmt (z. B. gebogen). Weiterhin können die erste und zweite Crash-Strebe entlang einer Hochachse der Vorbaustruktur versetzt angeordnet sein. Beispielsweise kann die zweite Crash-Strebe - bezüglich der Hochachse der Vorbaustruktur - oberhalb oder unterhalb der ersten Crash-Strebe angeordnet sein.

Durch das Vorsehen einer weiteren Crash-Strebe kann auf vorteilhafte Weise die Aufprallenergie auf mehrere derartige Deformationselemente verteilt werden, wodurch die Sicherheit für dahinterliegende Fahrzeugkomponenten erhöht werden kann.

Gemäß einem weiteren Aspekt können die erste Crash-Strebe und die zweite Crash-Strebe planparallel versetzt (z. B. höhenversetzt) zueinander angeordnet sein. Die erste und zweite Crash-Strebe können somit jeweils in zueinander parallelen Ebenen liegen. Beispielsweise kann die zweite Crash-Strebe dazu horizontal und/oder vertikal zur ersten Crash-Strebe verschoben sein. In einer besonders bevorzugten Variante ist hierbei vorgehen, dass die erste und/oder zweite Crash-Strebe U-förmig ausgebildet ist/sind. Beispielsweise können dabei sowohl die erste als auch zweite Crash-Strebe jeweils in Form eines U-förmigen, vorzugsweise nach hinten offenen, Bügels ausgebildet sein. Weiterhin können die erste und zweite Crash-Strebe mittels der Aufnahmeelemente miteinander verbunden sein. Die Crash-Struktur kann somit als eine Art Sandwich-Struktur verstanden werden, bei der die Aufnahmeelemente zwischen den ersten und zweiten (planparallel zueinander versetzten) Crash-Streben, quasi als Distanzhalter, angeordnet sind. Auf vorteilhafte Weise kann dadurch eine vorfertigbare, vorzugsweise selbsttragende, Crash-Struktur bereitgestellt werden, was wiederum die Montage der Vorbaustruktur vereinfacht.

Nach einem weiteren Aspekt kann die zweite Crash-Strebe unmittelbar auf den Rahmen-Längsträgern aufliegen. Beispielsweise kann die zweite Crash-Strebe einen ersten Endbereich aufweisen, der auf dem ersten Rahmen-Längsträger aufliegt, und einen zweiten Endbereich aufweisen, der auf dem zweiten Rahmen-Längsträger aufliegt. Bevorzugt kann die zweite Crash-Strebe dabei unmittelbar an den Rahmen-Längsträgern befestigt (z. B. angeschraubt, angeschweißt und/oder angenietet) sein. Weiterhin kann die erste Crash-Strebe mittelbar, z. B. über die Aufnahmeelemente und die zweite Crash-Strebe, an den Rahmen-Längsträgern befestigt sein. Lediglich beispielhafte kann die erste Crash-Strebe in den beiden Aufnahmeelementen aufgenommen sein, wobei die Aufnahmeelemente jeweils an der zweiten Crash-Strebe befestigt (z. B. angeschraubt, angeschweißt und/oder angenietet) sind.

Zudem oder alternativ kann die Crash-Struktur auch Versteifungselemente (z. B. in Form vertikaler Streben) umfassen, welche die erste und zweite Crash-Strebe, vorzugsweise vertikal, miteinander verbinden. Unter "vertikal" kann dabei vorzugsweise ein "entlang einer Hochachse der Vorbaustruktur verlaufend" verstanden werden. Bevorzugt können die Versteifungselemente in einem mittleren Bereich der ersten und/oder zweiten Crash-Strebe angeordnet sein. Beispielsweise können die Versteifungselemente im Bereich der Mitte der ersten Crash-Strebe mit der ersten Crash-Strebe verbunden sein und/oder im Bereich der Mitte der zweiten Crash-Strebe mit der zweiten Crash-Strebe verbunden sein. Auf vorteilhafte Weise kann dadurch die Stabilität der Crash-Struktur erhöht werden.

Zudem oder alternativ kann die erste Crash-Strebe in Bezug auf die zweite Crash-Strebe nach hinten versetzt (z. B. nach hinten verschoben) angeordnet sein. Beispielsweise kann der Schwerpunkt der ersten Crash-Strebe weiter vom Kühlmodul entfernt angeordnet sein als der Schwerpunkt der zweiten Crash-Strebe.

Gemäß einem Aspekt kann die Crash-Struktur eine, vorzugsweise räumschildförmige, Verkleidung umfassen. Die Verkleidung kann dabei zwei in Richtung des Kühlmoduls keilförmig auf eine Spitze zulaufende Scharbleche aufweisen. Bevorzugt kann dies dazu dienen, um bei einem Aufprallereignis auf die Crash-Struktur auftreffende Objekte (z. B. das Heck eines weiteren beim Aufprallereignis beteiligten Kraftfahrzeugs) von der Crash-Struktur (z. B. seitlich) wegzulenken. Beispielsweise kann die (z. B. räumschildförmige) Verkleidung bzw. die Scharbleche ausgebildet sein, in das Kraftfahrzeug eindringende Objekte seitlich und/oder nach oben abzulenken. Als "Ablenken" kann dabei bevorzugt ein Umleiten in eine, von einer ursprünglichen Bewegungsrichtung abweichende, Richtung verstanden werden. Auf vorteilhafte Weise kann dadurch der Schutz für hinter der Crash-Struktur angeordnete Fahrzeugkomponenten (z. B. eine Traktionsbatterie) noch weiter erhöht werden.

Nach einem weiteren Aspekt kann die Verkleidung nach hinten offen sein. Die Verkleidung der Crash-Struktur kann somit nicht vollständig geschlossen sein, sondern bevorzugt auf einer dem Kühlmodul abgewandten Seite eine Öffnung, eine Aussparung und/oder einen Bereich ohne Verkleidung aufweisen. Zudem oder alternativ können die Scharbleche auch nach hinten geneigt sein. Beispielsweise können die Scharbleche nach hinten rampenförmig ansteigen. Auf vorteilhafte Weise kann dadurch auch eine Ablenkung der Objekte nach oben erreicht werden. Zudem oder alternativ kann die Crash-Struktur zwei, vorzugsweise U-förmige, Träger umfassen, an welchen die Verkleidung befestigt ist. Beispielsweise kann dabei einer der zwei, vorzugsweise nach hinten offenen, U-förmige Träger auf den Rahmen-Längsträgern aufliegen und der zweite der U-förmige Träger gegenüber dem ersten Träger in einem, vorzugsweise spitzen, Winkel angestellt sein.

Gemäß einem weiteren Aspekt kann die Crash-Struktur in Form einer geschlossenen Kastenstruktur ausgebildet sein. Als "geschlossene Kastenstruktur" kann dabei bevorzugt ein allseitig mit Stahlblechen verschlossener Hohlkörper verstanden werden. Bevorzugt weist die Kastenstruktur dabei (z. B. im Inneren der Kastenstruktur angeordnete) Verstärkungsstreben zur Versteifung der Crash-Struktur auf. Beispielsweise kann die Kastenstruktur eine Mehrzahl von, vorzugsweise eingeschweißten, Rippen und/oder Schottbleche aufweisen. Zudem oder alternativ kann die Crash-Struktur auch zumindest eine, vorzugsweise zwei, Schraubpaneele aufweisen, mittels derer die Kastenstruktur an einem der Rahmen-Längsträger verschraubt ist. Auf vorteilhafte Weise kann dadurch wiederum ein zuverlässiger Frontaufprallschutz für hinter der Crash-Struktur angeordnete Fahrzeugkomponenten bereitgestellt werden.

Nach einem weiteren Aspekt kann die geschlossene Kastenstruktur dabei miteinander verschweißte Stahlbleche (z. B. Kantbleche) umfassen. Auf vorteilhafte Weise kann dadurch eine einfache Fertigung der Crash-Struktur ermöglicht werden. Zudem oder alternativ kann die Kastenstruktur auch eine, vorzugsweise flache, Boden- und/oder Deckplatte umfassen. Zudem oder alternativ kann die Kastenstruktur auch eine dem Kühlmodul zugewandte Frontplatte umfassen, die eine, vorzugsweise konkave, Wölbung aufweist. Auf vorteilhafte Weise kann dadurch wiederum ein zumindest teilweises seitliches Ablenken von beim Aufprallereignis ggf. auf die Crash-Struktur auftreffende Objekte ermöglicht werden. Zudem oder alternativ kann die Kastenstruktur auch an den zwei Rahmen-Längsträgern (z. B. mittels zweier an der Kastenstruktur befestigter Schraubpaneele, aufweisend eine Mehrzahl an Verschraubungsstellen) verschraubt sein.

Gemäß einem weiteren unabhängigen Aspekt wird ein Kraftfahrzeug bereitgestellt. Bevorzugt kann das Kraftfahrzeug ein Nutzfahrzeug sein, d. h. ein Fahrzeug, das durch seine Bauart und Einrichtung speziell zur Beförderung von Personen, zum Transport von Gütern und/oder zum Ziehen von Anhängerfahrzeugen ausgelegt ist. Beispielsweise kann das Kraftfahrzeug ein Omnibus, ein Lastkraftwagen oder eine Sattelzugmaschine sein. Besonders bevorzugt kann das Kraftfahrzeug ein Elektrofahrzeug und/oder ein batterieelektrisch angetriebenes Kraftfahrzeug sein. Das Kraftfahrzeug weist dabei eine Vorbaustruktur, wie in diesem Dokument beschrieben, auf. Mit anderen Worten kann das Kraftfahrzeug eine Vorbaustruktur umfassen, die wie in diesem Dokument beschrieben ausgebildet sein kann. Folglich sollen die jeweils im Zusammenhang mit der Vorbaustruktur beschrieben Merkmale auch im Zusammenhang mit dem Kraftfahrzeug als offenbart gelten und beanspruchbar sein. Entsprechendes soll auch umgekehrt gelten. Hierbei sie nochmals erwähnt, dass dabei sowohl die Vorbaustruktur selbst als auch das Kraftfahrzeug mit einer ebensolchen Vorbaustruktur jeweils mit einem Kühlmodul als auch ohne Kühlmodul ausgeführt sein können. Mit anderen Worten sollen sowohl die Vorbaustruktur als auch das Kraftfahrzeug jeweils auch ohne das Kühlmodul offenbart und beanspruchbar sein, wobei diese jeweiligen Gegenstände ansonsten alle weiteren in diesem Dokument beschrieben Merkmale aufweisen können.

Nach einem weiteren Aspekt kann das Kraftfahrzeug ein, vorzugsweise an den Rahmen-Längsträgern gelagertes, Fahrerhaus umfassen. Gemäß dem üblichen Verständnis kann unter dem Ausdruck "Fahrerhaus" bevorzugt eine Kabine zur Aufnahme eines Fahrzeugführers und/oder der Teil eines Aufbaus eines Nutzfahrzeugs, der den Raum für Fahrzeugführer und ggf. Begleitpersonen bildet, verstanden werden. Die vorgenannte Crash-Struktur kann hierbei unterhalb und/oder im Bereich des Fahrerhauses angeordnet sein.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Vorbaustruktur gemäß einer ersten Ausführungsform;
- Figur 2:: eine schematische Darstellung einer Vorbaustruktur gemäß einer zweiten Ausführungsform;
- Figur 3:: eine schematische Darstellung einer Vorbaustruktur gemäß einer dritten Ausführungsform;
- Figur 4:: eine schematische Darstellung einer Vorbaustruktur gemäß einer vierten Ausführungsform;
- Figur 5:: eine schematische Darstellung einer Vorbaustruktur gemäß einer fünften Ausführungsform;
- Figur 6:: eine schematische Darstellung einer Vorbaustruktur gemäß einer sechsten Ausführungsform; und
- Figur 7:: eine schematische Darstellung einer Vorbaustruktur gemäß einer siebten Ausführungsform.

Gleiche oder funktional äquivalente Elemente sind in allen Figuren mit denselben Bezugszeichen beschrieben und zum Teil nicht gesondert beschrieben.

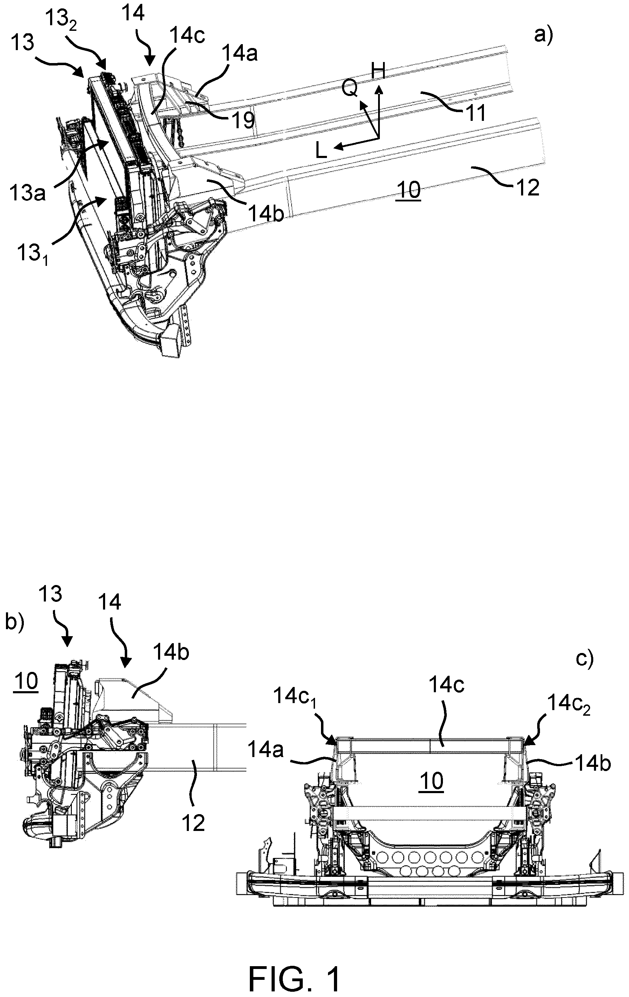

Bevor eingehender auf die speziellen Komponenten der jeweiligen Vorbaustrukturen 10 der Figuren 1 bis 7 eingegangen werden wird, sollen zunächst die allen Varianten gemeinsamen Merkmale beschrieben werden. So zeigen alle Figuren jeweils eine Vorbaustruktur 10 für ein Kraftfahrzeug, vorzugsweise ein Nutzfahrzeug. Als Vorbaustruktur 10 kann dabei - gemäß dem üblichen Verständnis - bevorzugt eine Struktur verstanden werden, die im montierten Zustand in einem Frontbereich des Kraftfahrzeugs angeordnet ist und die Teile einer Tragstruktur des Kraftfahrzeugs umfasst. Die Vorbaustrukturen 10 weisen dabei jeweils zwei, vorzugsweise parallele, Rahmen-Längsträger 11 und 12 (z. B. C-Profilträger) mit je einem vorderen Ende 11a und 12a auf. Zur besseren Unterscheidung können die zwei Rahmen-Längsträger 11, 12 im Folgenden auch als erster Rahmen-Längsträger 11 und zweiter Rahmen-Längsträger 12 bezeichnet werden bzw. das vordere Ende 11a des ersten Rahmen-Längsträgers 11 auch als erstes vorderes Rahmen-Längsträgerende 11a und das vordere Ende 12a des zweiten Rahmen-Längsträgers 12 als zweites vorderes Rahmen-Längsträgerende 12a. Hierbei kann sich der Ausdruck "vorne" bzw. "vordere" bevorzugt auf die übliche Bedeutung dieser Begriffe bei einer Vorbaustruktur, die im vorderen Bereich (Frontbereich) des Kraftfahrzeugs angeordnet wird, beziehen, d. h., dass das erste bzw. zweite vordere Ende bezüglich der Vorwärtsfahrtrichtung des Kraftfahrzeugs (mit montierter Vorbaustruktur) vorne am Kraftfahrzeug, d. h. im Bereich der Fahrzeugfront, angeordnet sein kann. Die vorgenannten Rahmen-Längsträger 11, 12 können hierbei ferner Teil eines Fahrzeugrahmens (z. B. eines Leiterrahmens) sein und bevorzugt zur Befestigung zumindest einer Achse und/oder eines Aufbaus des Kraftfahrzeugs dienen.

Weiterhin umfassen die Vorbaustrukturen 10 jeweils eine Crash-Struktur 14, die bei einem, vorzugsweise vorbestimmten, Aufprallereignis (z. B. bei einem Frontalaufprall) unter Abbau von Aufprallkräften deformierbar ist. Die, vorzugsweise prellbockförmig ausgebildeten, Crash-Strukturen 14 erstreckt sich dabei jeweils oberhalb und quer zu den Rahmen-Längsträgern 11, 12. Der Ausdruck "oberhalb" kann sich dabei bevorzugt auf eine Hochachse H der Vorbaustruktur 10 beziehen, d. h., dass die Crash-Strukturen 14 jeweils auf einer Höhe angeordnet sein können, die über der der Rahmen-Längsträger 11, 12, vorzugsweise der Höhe deren Oberkanten, liegt. Der Ausdruck "quer" kann bevorzugt angeben, dass sich die Crash-Strukturen 14 jeweils vom ersten Rahmen-Längsträger 11 zum zweiten Rahmen-Längsträger 12 (z. B. senkrecht oder schräg zu den Rahmen-Längsträgern 11, 12) erstrecken. Beispielsweise können die Rahmen-Längsträger 11, 12 über die Crash-Struktur 14 miteinander verbunden sein. Zudem oder alternativ kann die Crash-Struktur 14 im Wesentlichen entlang einer Querachse Q der Vorbaustruktur 10 orientiert sein, wobei die Querachse Q eine senkrecht zur Mittelebene Vorbaustruktur 10 verlaufende Achse bezeichnen soll.

Ferner umfassen die in den Figuren 1 bis 7 dargestellten Vorbaustrukturen 10 jeweils ein Kühlmodul 13, das an den jeweiligen vorderen Enden 11a, 12a der Rahmen-Längsträger 11, 12 gelagert ist. Beispielsweise kann das, vorzugsweise vorfertigbare, Kühlmodul 13 mittels entsprechender Kühlerträger des Kühlmoduls 13 am ersten und zweiten vorderen Rahmen-Längsträgerende 11a, 12a angeschraubt und/oder angenietet sei. Hierbei sei jedoch erwähnt, dass das Kühlmodul 13 - obwohl in den Figuren 1 bis 7 gezeigt - im Allgemeinen kein zwingender Bestandteil der beanspruchten Vorbaustruktur 10 sein muss, d. h. die Vorbaustruktur 10 auch ohne das Kühlmodul 13 ausgeführt sein kann.

Bevorzugt erstreckt sich auch das Kühlmodul 13 quer zu den Rahmen-Längsträgern 11, 12, z. B. indem es senkrecht zum ersten und zweiten Rahmen-Längsträger 11, 12 orientiert ist. Hierbei kann das Kühlmodul 13 die Rahmen-Längsträger 11, 12 miteinander verbinden und/oder im Wesentlichen entlang der Querachse Q der Vorbaustruktur 10 orientiert sein. Weiterhin kann das Kühlmodul 13 einen oberen Kühlmodulbereich 13a aufweisen, der oberhalb der beiden Rahmen-Längsträger 11, 12 angeordnet ist. Mit anderen Worten kann sich das Kühlmodul 13 zumindest abschnittsweise bezüglich einer Hochachse H der Vorbaustruktur 10 oberhalb der zwei Rahmen-Längsträger 11, 12 erstrecken. Ferner kann das Kühlmodul 13 - wie beispielhaft dargestellt - einen vorderen ersten Kühler 13₁ und einen, vorzugsweise planparallel zum ersten Kühler 13₁ angeordneten, hinteren zweiten Kühler 13₂ umfassen. Beispielsweise kann es sich bei dem ersten Kühler 13₁ um einen Ladeluftkühler und bei dem zweiten Kühler 13₂ um einen Kühlmittelkühler handeln.

Bevorzugt ist vorgehen, dass die vorgenannte Crash-Struktur 14 hinter, vorzugsweise unmittelbar hinter, dem Kühlmodul 13 angeordnet ist. Mit anderen Worten kann die Crash-Struktur 14 rückseitig vom Kühlmodul 13 angeordnet sein. Als "rückseitig" kann dabei bevorzugt eine der Rückseite des Kühlmoduls 13 zugewandte Anordnung verstanden werden, wobei das Kühlmodul 13 hierzu eine Vorderseite, die in einer vorbestimmten Einbaulage der Vorbaustruktur 10 im Kraftfahrzeug vom Kraftfahrzeug wegweist (d. h. einer Umgebung des Kraftfahrzeugs zugewandt ist), und eine, der Vorderseite gegenüberliegende, Rückseite aufweisen kann. Anders ausgedrückt kann die Vorderseite des Kühlmoduls 13 im montierten Zustand der Vorbaustruktur 10 im Kraftfahrzeug einer Kühlluft-Strömung zugewandt sein und die Rückseite der Kühlluft-Strömung abgewandt sein. Weiterhin ist bevorzugt vorgesehen, dass sich die Crash-Struktur 13 zumindest abschnittsweise auf derselben Höhe wie der obere Kühlmodulbereich 13a befindet. Auf vorteilhafte Weise kann dadurch insgesamt ein zuverlässiger Schutz von hinter der Crash-Struktur 14 liegenden Fahrzeugkomponenten (z. B. eine Hochvoltbatterie) im Falle des Aufprallereignisses, insbesondere bei einem Frontalaufprall des Kraftfahrzeugs auf einen (z. B. vorausfahrenden) Sattelauflieger, erreicht werden.

Im Folgenden soll nun speziell auf die charakteristischen Merkmale der jeweiligen Ausführungsformen der Figuren 1 bis 7 eingegangen werden, wobei die entsprechenden Figuren jeweils verschiedene Ansichten (z. B. Front-, Seiten-, Pseudo-3D-Ansichten) derselben Ausführungsform zeigen. Aus Gründen der Übersichtlichkeit sind dabei nicht in allen Ansichten alle dargestellten Komponenten separat referenziert. Hierfür wird auf eine entsprechende Zusammenschau der einzelnen Ansichten verwiesen. Weiterhin sind zur besseren Sichtbarkeit aller Details der Crash-Strukturen 14 nicht in allen gezeigten Ansichten das optionale Kühlmodul 13 dargestellt.

Figur 1 zeigt eine schematische Darstellung einer Vorbaustruktur 10 gemäß einer ersten Ausführungsform. Die Crash-Struktur 14 umfasst hierbei zwei, vorzugsweise spiegelbildlich zueinander ausgeführte, Aufnahmeelemente 14a, 14b, die im Folgenden zur besseren Unterscheidung als erstes Aufnahmeelement 14a und zweites Aufnahmeelement 14b bezeichnet werden können. Vorliegend sind das erste und zweite Aufnahmeelement 14a, 14b jeweils - lediglich beispielhaft - in Form zweier offener Profile mit C-förmigen Querschnitt ausgebildet sind, wobei die jeweiligen Öffnungen der Profile zueinander orientiert sind, d. h. die Profile bzw. die Aufnahmeelemente 14a, 14b nach außen hin geschlossen sind. Bevorzugt ist weiterhin vorgesehen, dass die beiden Aufnahmeelement 14a, 14b jeweils nach hinten, d. h. in Richtung der den jeweiligen vorderen Enden 11a, 12a gegenüberliegenden (nicht dargestellten) hinteren Enden der Rahmen-Längsträger 11, 12, abfallend, vorzugsweise rampenförmig abfallend, ausgebildet sind. Vorliegend ist dabei das erste Aufnahmeelement 14a mit dem ersten Rahmen-Längsträger 11 verbunden (z. B. verschraubt, vernietet und/oder verschweißt) und das zweite Aufnahmeelement 14b mit dem zweiten Rahmen-Längsträger 12 verbunden (z. B. verschraubt, vernietet und/oder verschweißt). Bevorzugt umfassen die Aufnahmeelemente 14a, 14b zusätzlich jeweils Verstärkungsstreben 19 (z. B. Schottbleche) zur Versteifung des jeweiligen Aufnahmeelements 14a, 14b.

Weiterhin umfasst die vorliegende Crash-Struktur 14 eine Crash-Strebe 14c, die zur besseren Unterscheidbarkeit auch als erste Crash-Strebe 14c bezeichnet werden kann. Die erste Crash-Strebe 14c kann dabei - wie vorliegend beispielhaft dargestellt - als (z. B. quadratisches) Hohlprofil aufgeführt sein und/oder gekrümmt (z. B. gebogen) ausgeführt sein. Bevorzugt ist die erste Crash-Strebe 14c - wie vorliegend beispielhaft dargestellt - zum Kühlmodul 13 hin gekrümmt ausgeführt. Die erste Crash-Strebe 14c weist ferner zwei, vorzugsweise einander gegenüberliegende, Endbereiche 14c₁ und 14c₂ auf, wobei die Endbereiche 14c₁, 14c₂ jeweils in einem der zwei Aufnahmeelemente 14a, 14b aufgenommen sind. Mit anderen Worten kann die erste Crash-Strebe 14c somit einen ersten Endbereich 14c, umfassen, der im ersten Aufnahmeelement 14a aufgenommen ist und einen zweiten Endbereich 14c₂ umfassen, der im zweiten Aufnahmeelement 14b aufgenommen ist. In der vorliegenden, lediglich exemplarischen, Ausführungsform kann die erste Crash-Strebe 14c dazu mit den beiden Aufnahmeelementen 14a, 14b verschweißt sein, sodass die Komponenten erste Crash-Strebe 14c, erstes Aufnahmeelement 14a und zweites Aufnahmeelement 14b z. B. eine gemeinsame Schweißbaugruppe bilden können. Bevorzugt wird die erste Crash-Strebe 14c dabei mittels der beiden Aufnahmeelemente 14a, 14b oberhalb und quer zu den Rahmen-Längsträger 11, 12 gehalten. Mit anderen Worten kann die Crash-Struktur 14 ähnlich einem auf Schienen gelagerten Prellbock ausgeführt sein, um dadurch auf vorteilhafte Weise hinter der Crash-Struktur 14 liegende Fahrzeugkomponenten (z. B. eine Hochvoltbatterie) im Falle des Aufprallereignisses, z. B. bei einem Frontalaufprall des Kraftfahrzeugs auf ein Heck eines Sattelaufliegers, zu schützen.

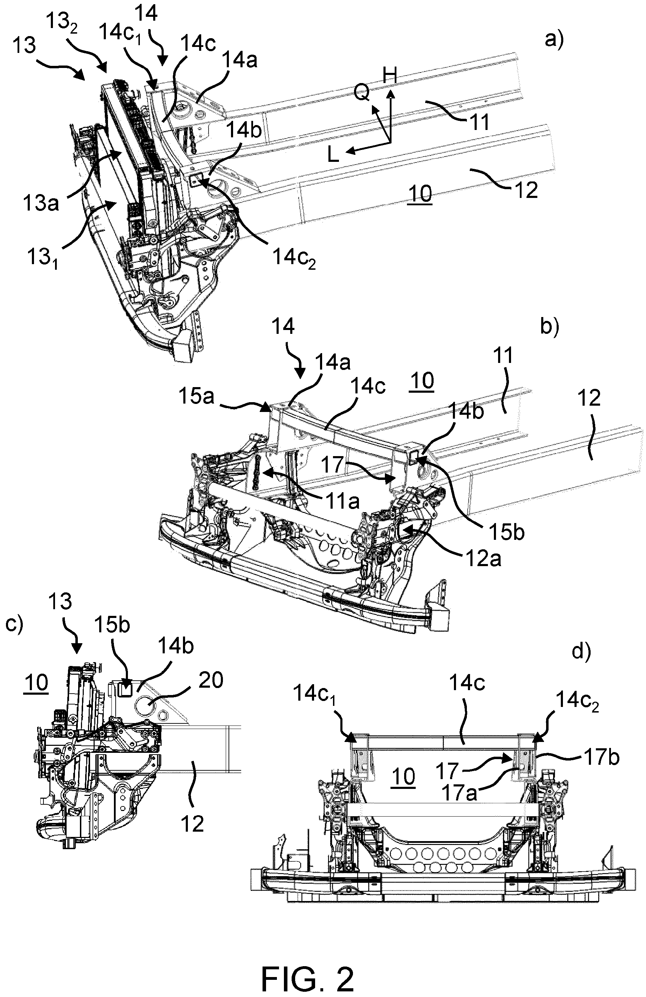

Figur 2 zeigt eine schematische Darstellung einer Vorbaustruktur 10 gemäß einer zweiten Ausführungsform. Die Crash-Struktur 14 umfasst hier ebenfalls ein erstes und zweites (z. B. jeweils aus Stahl gefertigtes) Aufnahmeelement 14a, 14b, die vorzugsweise wiederum spiegelbildlich zueinander ausgeführt sein können. Das erste Aufnahmeelement 14a ist dabei wiederum mit dem ersten Rahmen-Längsträger 11 verbunden (z. B. verschraubt, vernietet und/oder verschweißt), während das zweite Aufnahmeelement 14b mit dem zweiten Rahmen-Längsträger 12 verbunden (z. B. verschraubt, vernietet und/oder verschweißt) ist. Im vorliegenden Fall weist jedes der Aufnahmeelemente 14a, 14b - lediglich beispielhaft - eine einseitig offene Kassetten 17 auf, wobei die jeweiligen Kassetten 17 nach vorne, d. h. auf einer dem Kühlmodul 13 zugewandten Seite, offen sind. Bevorzugt ist auch hier vorgesehen, dass die beiden Aufnahmeelemente 14a, 14b jeweils nach hinten, d. h. in Richtung der den jeweiligen vorderen Enden 11a, 12a gegenüberliegenden (nicht dargestellten) hinteren Enden der Rahmen-Längsträger 11, 12, abfallend, vorzugsweise rampenförmig abfallend, ausgebildet sind. Jede der Kassetten 17 umfasst dabei vorliegend beispielhaft zwei planparallele Seitenteile 17a, 17b mit je einer Öffnung. Die Flächen der entsprechenden Seitenteile 17a, 17b können dabei bevorzugt senkrecht zur Querachse Q der Vorbaustruktur 10 orientiert angeordnet sein. Die jeweiligen, vorzugsweise miteinander fluchtenden, Öffnungen der Seitenteile können dabei einen Durchgang 15a, 15b im jeweiligen Aufnahmeelement 14a, 14b bilden. Mit anderen Worten kann das erste Aufnahmeelement 14a einen ersten Durchgang 15a aufweisen, der von zwei Öffnungen in den Seitenteilen 17a, 17b des ersten Aufnahmeelements 14a gebildet wird und das zweite Aufnahmeelement 14b kann einen zweiten Durchgang 15b aufweisen, der von zwei Öffnungen in den Seitenteilen 17a, 17b des zweiten Aufnahmeelement 14b gebildet wird. Optional können die beiden Aufnahmeelemente 14a, 14b jeweils ein oder mehrere Aussparungen 20 umfassen, um dadurch Gewicht einzusparen. Beispielhaft umfassen die dargestellten Aufnahmeelemente 14a, 14b entsprechende Aussparungen 20 in Form von jeweils zwei kreisförmigen Ausstanzungen in den Seitenteilen 17a, 17b der beiden Kassetten 17.

Weiterhin umfasst die vorliegende Crash-Struktur 14 wiederum eine erste Crash-Strebe 14c. Lediglich beispielhaft kann diese wiederum als (z. B. quadratisches) Hohlprofil aufgeführt sein und/oder gekrümmt, vorzugsweise zum Kühlmodul 13 hin gekrümmt, ausgeführt sein. Die Crash-Strebe 14c weist dabei erneut zwei, vorzugsweise einander gegenüberliegende, Endbereiche auf, wobei ein erster Endbereich 14c₁ im ersten Aufnahmeelement 14a aufgenommen ist und ein zweiter Endbereich 14c₂ im zweiten Aufnahmeelement 14b aufgenommen ist. Vorliegend ist dabei der erste Endbereich 14c₁ der ersten Crash-Strebe 14c im ersten Durchgang 15a des ersten Aufnahmeelements 14a aufgenommen (z. B. eingesteckt) und der zweite Endbereich 14c₂ der ersten Crash-Strebe 14c im zweiten Durchgang 15b des zweiten Aufnahmeelements 14b aufgenommen (z. B. eingesteckt). Bevorzugt weisen die jeweiligen Durchgängen 15a, 15b bzw. die entsprechenden Öffnungen der Seitenteile 17a, 17b hierbei ein zum Außenprofil der ersten Crash-Strebe 14c korrespondierendes Profil auf. Im vorliegenden lediglich beispielhaften Fall weist die erste Crash-Strebe 14c ein quadratisches Außenprofil und die Durchgänge 15a, 15b bzw. Öffnungen entsprechend ebenfalls ein quadratisches Profil auf. Auf vorteilhafte Weise kann dadurch eine, vorzugsweise zumindest abschnittsweise formschlüssige, Halterung der ersten Crash-Strebe 14c in den jeweiligen Durchgänge 15a, 15b erreicht werden, die bei einer Bewegung und/oder Verformung der ersten Crash-Strebe 14c im Crashfall ein eine Ausgleichsbewegung der ersten Crash-Strebe 14c durch die jeweiligen Durchgänge 15a, 15b ermöglicht. Mit anderen Worten kann die erste Crash-Strebe 14c zwar jeweils in einer Ebene senkrecht zur Querachse Q der Vorbaustruktur 10 von den Kassetten 17 umschlossen werden, entlang der Querachse Q der Vorbaustruktur 10 kann jedoch eine Bewegung (z. B. eine Verschiebung) der ersten Crash-Strebe 14c im Crashfall erfolgen und damit ein seitliches "Durchtauchen" bzw. ein durch den jeweiligen Durchgang Hindurchschieben der ersten Crash-Strebe 14c ermöglicht werden. Auf vorteilhafte Weise kann dadurch erreicht werden, dass die Aufprallenergie im Falle eines Crashs vorrangig in die Verformung der ersten Crash-Strebe 14c umgesetzt wird, ohne dass die erste Crash-Strebe 14c dabei aus ihrer Halterung ausbricht.

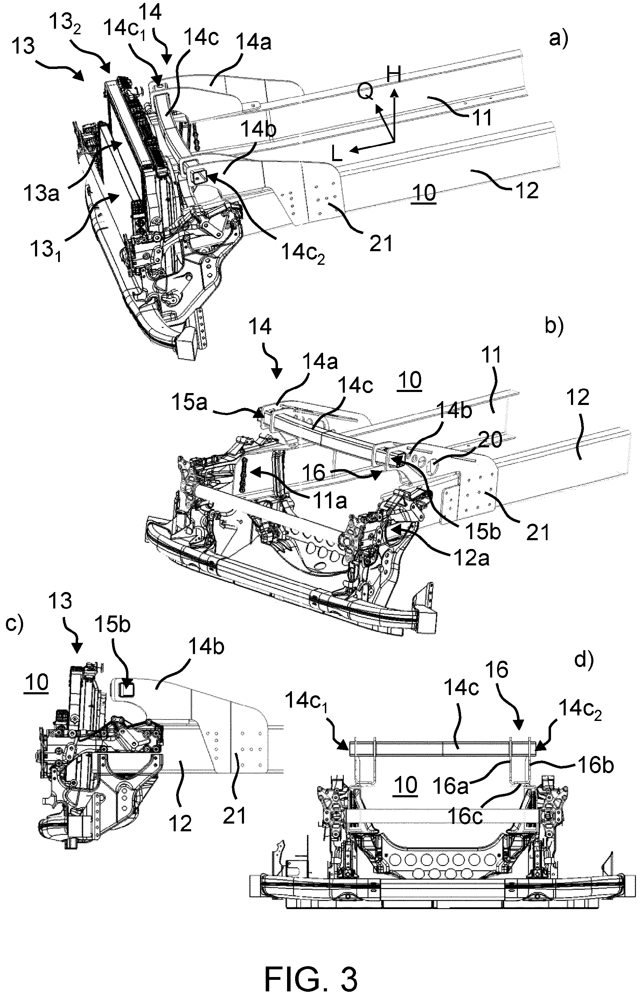

Figur 3 zeigt eine schematische Darstellung einer Vorbaustruktur 10 gemäß einer dritten Ausführungsform. Ähnlich zu der vorstehend beschriebenen Ausführungsform gemäß Figur 2 umfasst auch hier die Crash-Struktur 14 wieder zwei Aufnahmeelement 14a, 14b, die vorzugsweise wiederum spiegelbildlich zueinander ausgeführt sein können. Jedes der (z. B. aus Stahl gefertigten) Aufnahmeelement 14a, 14b ist dabei wiederum mit einem der Rahmen-Längsträger 11, 12 verbunden (z. B. verschraubt, vernietet und/oder verschweißt). Im Gegensatz zu der im Zusammenhang mit Figur 2 beschriebenen Ausführung der Aufnahmeelemente 14a, 14b in Form von kastenförmiger Kassetten 17 weisen die Aufnahmeelemente 14a, 14b vorliegend jeweils ein nach oben geöffnetes U-Profil 16 auf. Das U-Profil 16 kann dabei einteilig ausgebildet sein oder kann - wie beispielhaft dargestellt ist - durch zwei miteinander verbundene L-Profilteile gebildet werden. Wie in der Frontansicht d) gut zu erkennen ist, umfasst jedes der U-Profile 16 zwei planparallele Trägerschenkel 16a und 16b. Die Flächen der entsprechenden Trägerschenkel 16a, 16b können dabei bevorzugt senkrecht zur Querachse Q der Vorbaustruktur 10 orientiert angeordnet sein. Weiterhin umfasst jedes der U-Profile 16 einen Mittelteil 16c, der die Trägerschenkel 16a, 16b miteinander verbindet und der jeweils auf einem der Rahmen-Längsträger 11, 12 aufliegt. Jeder der vorgenannten Trägerschenkel 16a, 16b weist dabei eine Öffnung auf, wobei die entsprechenden Öffnungen eines Aufnahmeelements 14a, 14b bevorzugt miteinander fluchten. Analog wie im vorstehend im Zusammenhang mit Figur 2 beschriebenen Fall, können auch hier die Öffnungen der Trägerschenkel 16a, 16b jeweils einen Durchgang 15a, 15b im jeweiligen Aufnahmeelement 14a, 14b bilden. Mit anderen Worten kann das erste Aufnahmeelement 14a einen ersten Durchgang 15a aufweisen, der von den zwei Öffnungen in den Trägerschenkeln 16a, 16b des ersten Aufnahmeelements 14a gebildet wird und das zweite Aufnahmeelement 14b kann einen zweiten Durchgang 15b aufweisen, der von den zwei Öffnungen in den Trägerschenkeln 16a, 16b des zweiten Aufnahmeelements 14b gebildet wird.

In den vorgenannten Durchgängen 15a, 15b ist vorliegend jeweils wiederum eine erste Crash-Strebe 14c aufgenommen, welche lediglich beispielhaft als, vorzugsweise gekrümmtes, Hohlprofil (z. B. ein Hohlprofil mit quadratischem Querschnitt) aufgeführt sein kann. Vorliegend ist dabei wiederum ein erster Endbereich 14c₁ der ersten Crash-Strebe 14c im ersten Durchgang 15a des ersten Aufnahmeelements 14a aufgenommen (z. B. hindurchgesteckt) und ein zweiter Endbereich 14c₂ der ersten Crash-Strebe 14c im zweiten Durchgang 15b des zweiten Aufnahmeelements 14b aufgenommen (z. B. hindurchgesteckt). Bevorzugt weisen die jeweiligen Durchgänge 15a, 15b bzw. die entsprechenden Öffnungen der Trägerschenkel 16a, 16b hierbei ein zum Außenprofil der ersten Crash-Strebe 14c korrespondierendes Profil (vorliegend z. B. ein quadratisches Profil) auf. Auf vorteilhafte Weise kann die ersten Crash-Strebe 14c dadurch wieder zwar jeweils in einer Ebene senkrecht zur Querachse Q der Vorbaustruktur 10 von den U-Profilen 16 umschlossen werden, entlang der Querachse Q der Vorbaustruktur 10 kann jedoch eine Bewegung (z. B. eine Verschiebung) der ersten Crash-Strebe 14c im Crashfall erfolgen und damit ein eine Ausgleichsbewegung der ersten Crash-Strebe 14c durch die jeweiligen Durchgänge 15a, 15b ermöglicht werden. Ferner kann auch hier die erste Crash-Strebe 14c mittels der beiden Aufnahmeelemente 14a, 14b bevorzugt oberhalb und quer zu den Rahmen-Längsträgern 11, 12 gehalten werden, sodass auf vorteilhafte Weise - ähnlich einem auf Schienen gelagerten Prellbock - hinter der Crash-Struktur 14 liegende Fahrzeugkomponenten (z. B. eine Hochvoltbatterie) im Falle des Aufprallereignisses, z. B. bei einem Frontalaufprall des Kraftfahrzeugs auf ein Heck eines Sattelaufliegers, geschützt werden können.

Als weitere optionale Komponenten können die beiden Aufnahmeelemente 14a, 14b bzw. U-Profile 16 ferner jeweils ein oder mehrere Aussparungen 20 zur Gewichtsreduktion umfassen. Dies ist in Ansicht b) beispielhaft für den Fall von drei kreisförmigen Ausstanzungen in den Trägerschenkeln 16a und 16b der jeweiligen Aufnahmeelemente 14a und 14b bzw. U-Profile 16 dargestellt. Weiterhin zeigt die vorliegende exemplarische Darstellung eine weitere optionale Komponente der Aufnahmeelemente 14a, 14b. So weisen beide Aufnahmeelement 14a, 14b vorliegend lediglich beispielhaft jeweils eine, vorzugsweise ausgekragte, Trägerplatte 21 auf, mittels derer die Aufnahmeelemente 14a, 14b an den jeweiligen Rahmen-Längsträgern 11, 12 montiert (z. B. angeschraubt und/oder angenietet) sind. Bevorzugt kann die jeweilige Trägerplatte 21 dabei einen flachen Bereich mit einer Mehrzahl von Befestigungsstellen aufweisen, mittels dem die jeweilige Trägerplatte 21 seitlich außen an einen Rahmen-Längsträger befestigbar (z. B. anschraubbar und/oder annietbar) ist. Vorzugsweise ist die Trägerplatte 21 hierbei integral an das jeweilige Aufnahmeelement 14a, 14b angeformt, d. h. bevorzugt ist das Aufnahmeelement 14a, 14b mit Trägerplatte 21 einteilig ausgebildet.

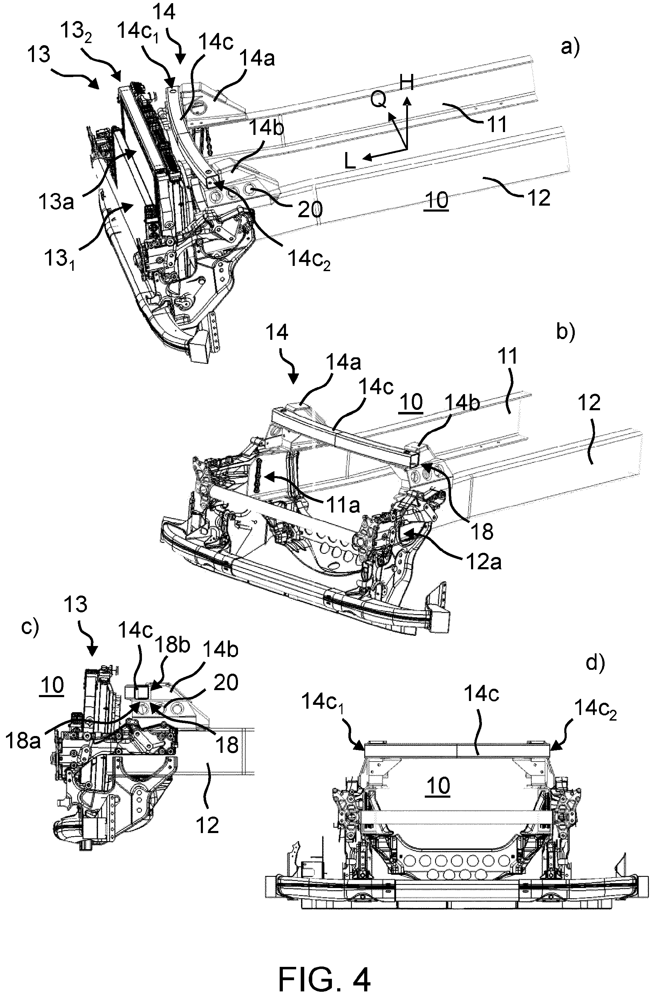

Figur 4 zeigt eine schematische Darstellung einer Vorbaustruktur 10 gemäß einer vierten Ausführungsform. Die Crash-Struktur 14 umfasst auch hier wiederum ein erstes und zweites (z. B. jeweils aus Stahl gefertigtes) Aufnahmeelement 14a, 14b. Dabei ist das erste Aufnahmeelement 14a wieder mit dem ersten Rahmen-Längsträger 11 verbunden (z. B. verschraubt, vernietet und/oder verschweißt), während das zweite Aufnahmeelement 14b mit dem zweiten Rahmen-Längsträger 12 verbunden (z. B. verschraubt, vernietet und/oder verschweißt) ist. Im vorliegenden Fall weist jedes der Aufnahmeelemente 14a, 14b - lediglich beispielhaft - eine Abstufung 18 auf. Bevorzugt sind die jeweiligen Abstufung 18 dabei auf einer dem Kühlmodul 13 zugewandten Seite, d. h. vorzugsweise vorderen Seite, der jeweiligen Aufnahmeelemente 14a, 14b angeordnet. Wie in Ansicht c) gut zu erkennen ist, weisen die Abstufungen 18 jeweils eine, vorzugsweise waagerechte, Stufenfläche 18a und eine, vorzugsweise vertikale, Stoßfläche 18b auf.

Weiterhin umfasst die Crash-Struktur 14 wiederum eine erste Crash-Strebe 14c. Lediglich beispielhaft kann diese z. B. als (z. B. quadratisches) Hohlprofil aufgeführt sein und/oder gekrümmt, vorzugsweise zum Kühlmodul 13 hin gekrümmt, ausgeführt sein. Die Crash-Strebe 14c weist wiederum zwei, vorzugsweise einander gegenüberliegende, Endbereiche 14c₁ und 14c₂ auf, wobei ein erster Endbereich 14c₁ mit dem ersten Aufnahmeelement 14a verbunden ist und ein zweiter Endbereich 14c₂ mit dem zweiten Aufnahmeelement 14b verbunden ist. Vorliegend liegt dabei der erste Endbereich 14c₁ der ersten Crash-Strebe 14c auf der Stufenfläche 18a des ersten Aufnahmeelements 14a, vorzugsweise flächig, auf und/oder an der Stoßfläche 18b des ersten Aufnahmeelements 14a, vorzugsweise flächig, an. Zudem oder alternativ liegt der zweite Endbereich 14c₂ der ersten Crash-Strebe 14c auf der Stufenfläche 18a des zweiten Aufnahmeelements 14b, vorzugsweise flächig, auf und/oder an der Stoßfläche 18b des zweiten Aufnahmeelements 14b, vorzugsweise flächig, an. Auf vorteilhafte Weise kann dadurch eine Abstützung der erste Crash-Strebe 14c von hinten und unten erreicht werden, wodurch wiederum eine vorrangige Kraftaufnahme der ersten Crash-Strebe 14c entlang der Längsachse L der Vorbaustruktur 10 bzw. der Rahmen-Längsträger 11, 12 erreicht werden kann.

Um die erste Crash-Strebe 14c zusätzlich an den Aufnahmeelementen 14a, 14b zu fixieren, kann die erste Crash-Strebe 14c optional mittels Schraubverbindungen an den jeweiligen Stufenflächen 18a der Aufnahmeelemente 14a, 14b gehalten sein. Lediglich beispielhaft kann die erste Crash-Strebe 14c dazu mittels die erste Crash-Strebe 14c jeweils durchdringenden Schrauben an den jeweiligen Stufenflächen 18a verschraubt sein. Bevorzugt ist dabei vorgesehen, dass die Schraubverbindungen ausgebildet sind, bei einer vorbestimmten crashbedingten Kraftbeaufschlagung zu versagen, um dadurch eine (Ausgleichs-)Bewegung der ersten Crash-Strebe 14c (z. B. infolge einer Spreizung der ersten Crash-Strebe 14c), vorzugsweise quer zu den Rahmen-Längsträgern 11, 12, freizugeben. Zudem oder alternativ zum vorgenannten Sollversagen der Schraubverbindungen können diese jeweils auch ein, vorzugsweise quer zu den Rahmen-Längsträgern verlaufendes, Langloch und eine, im Langloch geführte, Schraube umfassen. Auch dadurch kann auf vorteilhafte Weise einerseits eine stabile Lagerung der ersten Crash-Strebe 14c erreicht werden, während gleichzeitig im Crashfall ein Bewegungsspielraum für die erste Crash-Strebe 14c besteht.

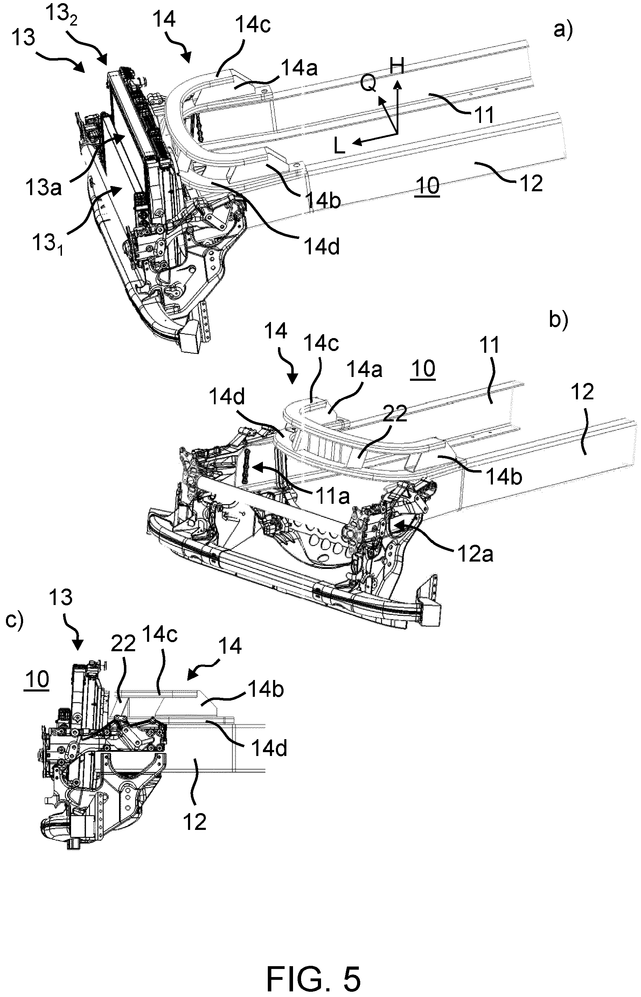

Figur 5 zeigt eine schematische Darstellung einer Vorbaustruktur 10 gemäß einer fünften Ausführungsform. Das Hauptcharakteristikum dieser Ausführungsform ist dabei, dass die Crash-Struktur 14 zwei Crash-Streben, nämlich eine erste Crash-Strebe 14c und eine zweite Crash-Strebe 14d umfasst. In diesem Zusammenhang soll jedoch erwähnt werden, dass prinzipiell auch die weiteren beispielhaft gezeigten Ausführungsformen im Einzelfall mehr als nur eine (erste) Crash-Strebe 14c umfassen können. In der vorliegenden Ausführungsform gemäß Figur 5 sind die erste und zweite Crash-Strebe 14c, 14d dabei - lediglich beispielhaft - beide U-förmig (z. B. als U-förmige Bügel) ausgebildet. Bevorzugt sind die U-förmigen Crash-Streben 14c, 14d dabei nach hinten offen, d. h. jede der Crash-Streben 14c, 14d kann einen zwischen zwei Endbereichen der jeweiligen Crash-Strebe 14c, 14d angeordneten mittleren Bereich aufweisen, der einen geringeren Abstand zum Kühlmodul 13 aufweist als die Endbereiche der entsprechenden Crash-Strebe 14c, 14d. Weiterhin sind vorliegend die erste Crash-Strebe 14c und die zweite Crash-Strebe 14d planparallel versetzt zueinander angeordnet. Während vorliegend die zweite Crash-Strebe 14d - lediglich exemplarisch - unmittelbar auf den beiden Rahmen-Längsträgern 11, 12 aufliegt, soll die erste Crash-Strebe 14c zur zweiten Crash-Strebe 14d z. B. nach hinten (horizontal) und oben (vertikal) verschoben angeordnet sein. Dabei kann die zweite Crash-Strebe 14d (z. B. mittels ihrer Endbereiche) unmittelbar an den beiden Rahmen-Längsträgern 11,12 befestigt (z. B. angeschraubt, angeschweißt und/oder angenietet) sein. Die erste Crash-Strebe 14c kann hingegen mittelbar, vorliegend über die zwei Aufnahmeelemente 14a, 14b sowie die zweite Crash-Strebe 14d, mit den Rahmen-Längsträgern 11, 12 verbunden sein. Die vorliegende Ausführungsform der Crash-Struktur 14 kann somit als eine Art dreilagige Art Sandwich-Struktur verstanden werden, bei der die Aufnahmeelemente 14a, 14b zwischen den ersten und zweiten (planparallel zueinander versetzten) Crash-Streben 14c, 14d, quasi als Distanzhalter, angeordnet sind. Auf vorteilhafte Weise kann so eine vorfertigbare, vorzugsweise selbsttragende, Crash-Struktur 14 bereitgestellt werden, die im Rahmen der Montage der Vorbaustruktur 10 einfach an die Rahmen-Längsträger 11, 12 angebracht werden kann. Optional kann die vorliegende Crash-Struktur 14 ferner Versteifungselemente 22 umfassen. Diese können, z. B. in Form vertikaler Hohlprofil-Streben, die erste und zweite Crash-Strebe 14c, 14d miteinander verbinden und/oder in einem mittleren Bereich der ersten und/oder zweiten Crash-Strebe 14c, 14d angeordnet sein.

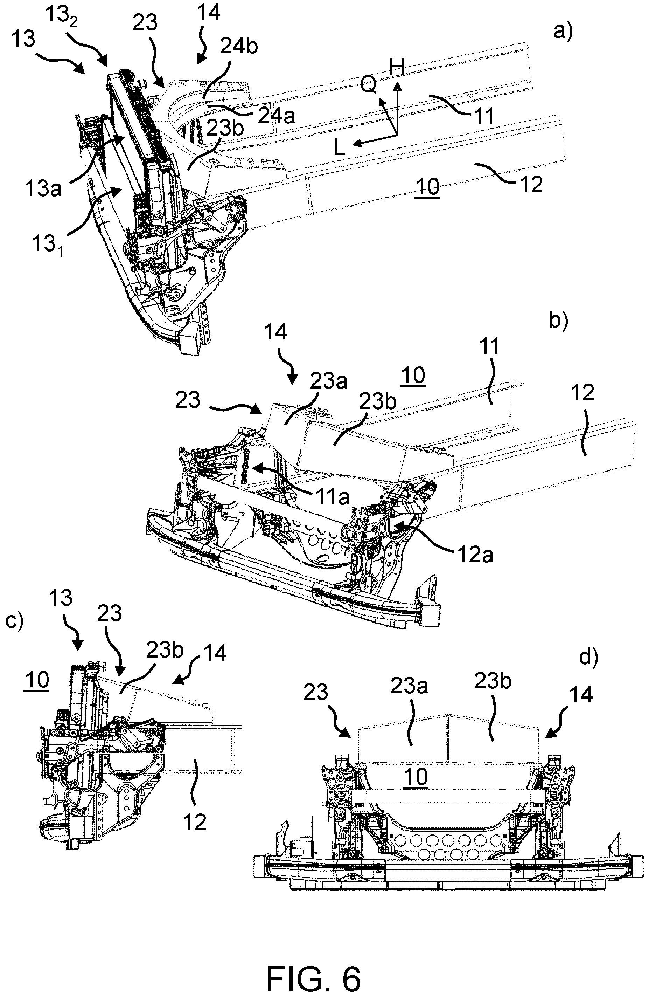

Figur 6 zeigt eine schematische Darstellung einer Vorbaustruktur 10 gemäß einer sechsten Ausführungsform. Das Hauptcharakteristikum dieser Ausführungsform ist dabei, dass die Crash-Struktur 14 eine, vorzugsweise räumschildförmige, Verkleidung 23 aufweist. Die Verkleidung 23 kann dabei - wie vorliegend beispielhaft dargestellt - zwei in Richtung des Kühlmoduls 13 keilförmig auf eine Spitze zulaufende Scharbleche 23a, 23b (z. B. in Form gekanteter Blechteile) aufweisen, welche bevorzugt dazu dienen, bei einem Aufprallereignis auf die Crash-Struktur 14 auftreffende Objekte (z. B. das Heck eines weiteren beim Aufprallereignis beteiligten Kraftfahrzeugs) von der Crash-Struktur 14 (z. B. seitlich) wegzulenken. Beispielsweise kann die, bevorzugt räumschildförmige, Verkleidung 23 dazu eine mittig zwischen den Rahmen-Längsträger 11, 12 verlaufende Kantung aufweisen, von welcher sich beidseitig die Scharbleche 23a, 23b nach schräg hinten erstrecken. Bevorzugt ist vorgesehen, dass, wie beispielsweise in Ansicht a) gut zu erkennen, die Verkleidung 23 nach hinten offen ist. Mit anderen Worten kann die Verkleidung 23 der Crash-Struktur 14 auf einer dem Kühlmodul 13 abgewandten Seite eine Öffnung, eine Aussparung und/oder einen Bereich ohne Verkleidung aufweisen. Zudem oder alternativ kann die Crash-Struktur 14 auch zwei, vorzugsweise nach hinten offene U-förmige, Träger 24a, 24b umfassen, an welchen die Verkleidung 23 befestigt ist und die im Folgenden zur besseren Unterscheidbarkeit als erste Träger 24a und zweiter Träger 24b bezeichnet werden können. Lediglich beispielhaft kann dabei - wie vorliegend dargestellt - der erste Träger 24a auf den beiden Rahmen-Längsträgern 11, 12 aufliegen und der zweite Träger 24b gegenüber dem ersten Träger 24a in einem, vorzugsweise spitzen, Winkel angestellt sein.

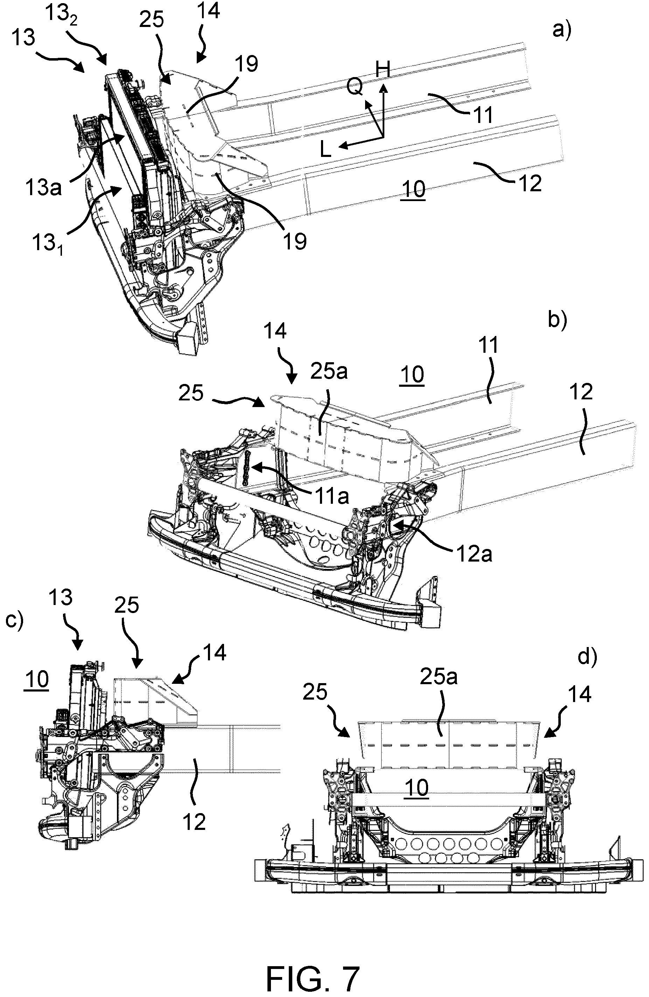

Figur 7 zeigt eine schematische Darstellung einer Vorbaustruktur 10 gemäß einer siebten Ausführungsform. Die Crash-Struktur 14 ist vorliegend in Form einer geschlossenen Kastenstruktur 25 ausgebildet. Die Kastenstruktur 25 kann dabei miteinander verschweißte Stahlbleche (z. B. Kantbleche) umfassen. Beispielsweise kann die Kastenstruktur 25 eine flache Boden- und Deckplatte umfassen sowie eine dem Kühlmodul zugewandte Frontplatte 25a, die eine, vorzugsweise konkave, Wölbung aufweist. Auf vorteilhafte Weise kann durch die gewölbte Frontplatte 25a wiederum ein zumindest teilweises seitliches Ablenken von beim Aufprallereignis ggf. auf die Crash-Struktur 14 auftreffende Objekte ermöglicht werden. Zur Befestigung der Crash-Struktur 14 an den Rahmen-Längsträgern 11, 12 kann die Crash-Struktur 14 ferner zwei Schraubpaneele umfassen, die jeweils eine Mehrzahl an Verschraubungsstellen aufweisen. Die Schraubpaneelen können dabei jeweils an der Kastenstruktur 25 befestigt (z. B. angeschweißt) sein und auf den Rahmen-Längsträgern 11, 12 aufliegend mit diesen mittels der Verschraubungsstellen verschraubt sein. Besonders bevorzugt weist die Kastenstruktur 25 ferner (z. B. im Inneren der Kastenstruktur 25 angeordnete) Verstärkungsstreben 19 zur Versteifung der Crash-Struktur 14 auf. Beispielsweise kann die Kastenstruktur 25 eine Mehrzahl von, vorzugsweise eingeschweißten, Rippen und/oder Schottbleche aufweisen, welche in der vorliegenden Figur 7 als gestrichelte Linien angedeutet sind.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Vorbaustruktur
- 11,12: Rahmen-Längsträger
- 11a, 12a: vorderes Ende
- 13: Kühlmodul
- 13a: oberen Kühlmodulbereich
- 13₁, 13₂: Kühler
- 14: Crash-Struktur
- 14a, 14b: Aufnahmeelemente
- 14c: erste Crash-Strebe
- 14c₁, 14c₂: Endbereich
- 14d: zweite Crash-Strebe
- 15a,15b: Durchgang
- 16: U-Profil
- 16a, 16b: Trägerschenkel
- 16c: Mittelteil
- 17: Kassette
- 17a, 17b: Seitenteile
- 18: Abstufung
- 18a: Stufenfläche
- 18b: Stoßfläche
- 19: Verstärkungsstrebe
- 20: Aussparungen
- 21: Trägerplatte
- 22: Versteifungselemente
- 23: Verkleidung
- 23a, 23b: Scharbleche
- 24a, 24b: Träger
- 25: Kastenstruktur
- 25a: Frontplatte
- H: Hochachse
- L: Längsachse
- Q: Querachse

## Patentansprüche

1. Nutzfahrzeug, aufweisend eine Vorbaustruktur (10), aufweisend:
- zwei Rahmen-Längsträger (11, 12) mit je einem vorderen Ende (11a, 12a);
- ein Kühlmodul (13), dass am den jeweiligen vorderen Enden (11a, 12a) der Rahmen-Längsträgers (11, 12) gelagert ist und dass sich quer zu den Rahmen-Längsträgern (11, 12) erstreckt;
- eine, vorzugsweise prellbockförmige, Crash-Struktur (14), die bei einem Aufprallereignis, vorzugsweise bei einem Frontalaufprall, unter Abbau von Aufprallkräften deformierbar ist, **dadurch gekennzeichnet, dass** sich die Crash-Struktur (14) oberhalb und quer zu den Rahmen-Längsträgern (11, 12) erstreckt; und dass die Crash-Struktur (14), vorzugsweise unmittelbar, hinter dem Kühlmodul (13) angeordnet ist.

2. Nutzfahrzeug (10) nach Anspruch 1, **dadurch gekennzeichnet, dass** das Kühlmodul (13) einen oberen Kühlmodulbereich (13a) aufweist, der oberhalb der Rahmen-Längsträger (11, 12) angeordnet ist, und dass die Crash-Struktur (14) zumindest teilweise auf Höhe des oberen Kühlmodulbereichs (13a) angeordnet ist.

3. Nutzfahrzeug (10) nach einem der vorherigen Ansprüche, **dadurch gekennzeichnet, dass** das Kühlmodul (13) zumindest einen, vorzugsweise quaderförmigen, Kühler (13₁, 13₂) aufweist, wobei der zumindest eine Kühler (13₁, 13₂)
a) von einem, vorzugsweise gasförmigen und/oder flüssigen, Wärmeträger durchströmbar ist; und/oder
b) senkrecht zu den zwei Rahmen-Längsträgern (11, 12) orientiert ist; und/oder
c) einen Ladeluftkühler und/oder einen Kühlmittelkühler umfasst; und/oder
d) einen vorderen ersten Kühler (13₁) und einen, vorzugsweise planparallel zum ersten Kühler angeordneten, hinteren zweiten Kühler (13₂) umfasst.

4. Nutzfahrzeug (10) nach einem der vorherigen Ansprüche, **gekennzeichnet durch** eine Hochvoltkomponente, vorzugsweise eine Traktionsbatterie, für einen batterieelektrischen Antrieb des Kraftfahrzeugs, wobei die Hochvoltkomponente hinter der Crash-Struktur (14) angeordnet ist und die Crash-Struktur (14) eine Crash-Struktur (14) zum Schutz der Hochvoltkomponente bei einem Frontalaufprall des Kraftfahrzeugs auf einen Sattelauflieger, vorzugsweise bei einem Frontalaufprall des Kraftfahrzeugs auf ein Heck eines Sattelaufliegers, ist.

5. Nutzfahrzeug (10) nach einem der vorherigen Ansprüche, **dadurch gekennzeichnet, dass** die Crash-Struktur (14)
- zwei, vorzugsweise spiegelbildlich zueinander ausgeführte, Aufnahmeelemente (14a, 14b) umfasst, die jeweils an einem der Rahmen-Längsträger (11, 12) befestigt sind; und
- eine, vorzugsweise gekrümmte, erste Crash-Strebe (14c) mit zwei, vorzugsweise einander gegenüberliegende, Endbereichen (14c₁, 14c₂) umfasst, wobei die Endbereiche (14c₁, 14c₂) jeweils in einem der zwei Aufnahmeelemente (14a, 14b) aufgenommen sind.

6. Nutzfahrzeug (10) nach Anspruch 5, **dadurch gekennzeichnet, dass** die erste Crash-Strebe (14c) als, vorzugsweise quadratisches, Hohlprofil ausgeführt ist und/oder gekrümmt ausgeführt ist, wobei vorzugsweise die erste Crash-Strebe (14c) zum Kühlmodul (13) hin gekrümmt ausgeführt ist.

7. Nutzfahrzeug (10) nach einem Ansprüche 5 oder 6, **dadurch gekennzeichnet, dass** zumindest eines der Aufnahmeelemente (14a, 14b) mit der ersten Crash-Strebe (14c) verschweißt ist und/oder zusammen mit der ersten Crash-Strebe (14c) eine gemeinsame Schweißbaugruppe bildet.

8. Nutzfahrzeug (10) nach einem Ansprüche 5 bis 7, **dadurch gekennzeichnet, dass** zumindest eines der Aufnahmeelemente (14a, 14b) einen Durchgang (15a, 15b) umfasst, der ein zu einem Außenprofil der ersten Crash-Strebe (14c) korrespondierendes Profil aufweist und in dem die erste Crash-Strebe (14c), vorzugsweise formschlüssig, aufgenommen ist.

9. Nutzfahrzeug (10) nach Anspruch 8, **dadurch gekennzeichnet, dass** die erste Crash-Strebe (14c) in dem Durchgang (15a, 15b) verschiebbar geführt ist, um dadurch im Falle einer crashbedingten Verformung der ersten Crash-Strebe (14c) eine Ausgleichsbewegung der ersten Crash-Strebe (14c) quer zu den Rahmen-Längsträgern (11, 12) zu ermöglichen.

10. Nutzfahrzeug (10) nach Anspruch 8 oder 9, **dadurch gekennzeichnet,**
a) **dass** das zumindest eine Aufnahmeelement (14a, 14b) ein nach oben geöffnetes U-Profil (16) umfasst, aufweisend zwei planparallele Trägerschenkel (16a, 16b) und einen die Trägerschenkel miteinander verbindenden Mittelteil (16c), wobei der Mittelteil (16c) auf einem der Rahmen-Längsträger (11, 12) aufliegt und jeder der Trägerschenkel (16a, 16b) jeweils eine Öffnung aufweist, wobei die, vorzugsweise miteinander fluchtenden, Öffnungen der Trägerschenkel den Durchgang (15a, 15b) des zumindest einen Aufnahmeelements (14a, 14b) bilden; oder
b) **dass** das zumindest eine Aufnahmeelement (14a, 14b) eine einseitig offene, vorzugsweise auf einer dem Kühlmodul (13) zugewandten Seite offene, Kassette (17) umfasst, aufweisend zwei planparallele Seitenteile (17a, 17b), die jeweils eine Öffnung aufweisen, wobei die, vorzugsweise miteinander fluchtenden, Öffnungen der Seitenteile den Durchgang (15a,15b) des zumindest einen Aufnahmeelements (14a, 14b) bilden.

11. Nutzfahrzeug (10) nach einem der Ansprüche 5 bis 10, **dadurch gekennzeichnet, dass** zumindest eines der Aufnahmeelemente (14a, 14b), vorzugsweise auf einer dem Kühlmodul (13) zugewandten Seite des zumindest einen Aufnahmeelements, eine Abstufung (18) aufweist, wobei die Abstufung (18) jeweils durch
- eine, vorzugsweise waagerechte, Stufenfläche (18a), auf der die erste Crash-Strebe (14c) aufliegt; und
- eine, vorzugsweise vertikale, Stoßfläche (18b), an der die erste Crash-Strebe (14c), vorzugsweise flächig, anliegt, gebildet wird.

12. Nutzfahrzeug (10) nach einem Ansprüche 11, **dadurch gekennzeichnet, dass** die erste Crash-Strebe (14c) mittels einer Schraubverbindung an der Stufenfläche des zumindest einen Aufnahmeelements (14a, 14b) gehalten ist,
a) wobei die Schraubverbindung ausgebildet ist, bei einer vorbestimmten crashbedingten Kraftbeaufschlagung zu versagen, um dadurch eine Ausgleichsbewegung der ersten Crash-Strebe (14c), vorzugsweise quer zu den Rahmen-Längsträgern (11, 12), zu ermöglichen; und/oder
b) wobei die Schraubverbindung ein, vorzugsweise quer zu den Rahmen-Längsträgern (11, 12) verlaufendes, Langloch und eine, im Langloch geführte, Schraube umfasst, um dadurch im Falle einer crashbedingten Verformung der ersten Crash-Strebe (14c) eine Ausgleichsbewegung der Crash-Strebe (14c), vorzugsweise quer zu den Rahmen-Längsträgern (11, 12), zu ermöglichen.

13. Nutzfahrzeug (10) nach einem der Ansprüche 5 bis 12, **dadurch gekennzeichnet, dass** zumindest eines der Aufnahmeelemente (14a, 14b)
a) Verstärkungsstreben (19), vorzugsweise Schottbleche, zur Versteifung des zumindest einen Aufnahmeelements (14a, 14b) umfasst; und/oder
b) Aussparungen (20), vorzugsweise kreisförmige Aussparungen, zur Gewichtsreduktion umfasst; und/oder
c) eine, vorzugsweise ausgekragte, Trägerplatte (21) umfasst, mittels derer das zumindest eine Aufnahmeelement (14a, 14b) an einem der Rahmen-Längsträger (11, 12) seitlich außen montiert, vorzugsweise verschraubt, ist; und/oder
d) nach hinten, vorzugsweise rampenförmig, abfallend ausgebildet ist; und/oder
e) als offenes Profil, vorzugsweise C-Profil, ausgebildet ist, wobei vorzugsweise die offene Profilseite des zumindest einen Aufnahmeelements (14a, 14b) ins Innere der Vorbaustruktur (10) orientiert ist.

14. Nutzfahrzeug (10) nach einem der Ansprüche 5 bis 13, **dadurch gekennzeichnet, dass** die Crash-Struktur (14) ferner eine, vorzugsweise gekrümmte, zweite Crash-Strebe (14d) umfasst, wobei vorzugsweise die erste und zweite Crash-Strebe (14d) entlang einer Hochachse der Vorbaustruktur (10) versetzt angeordnet sind.

15. Nutzfahrzeug (10) nach Anspruch 14, **dadurch gekennzeichnet, dass** die, vorzugsweise U-förmig ausgebildete, erste Crash-Strebe (14c) und die, vorzugsweise U-förmig ausgebildete, zweite Crash-Strebe (14d) planparallel versetzt, vorzugsweise höhenversetzt, zueinander angeordnet sind und mittels der Aufnahmeelemente (14a, 14b) miteinander verbunden sind.

16. Nutzfahrzeug (10) nach Anspruch 14 oder 15, **dadurch gekennzeichnet,**
a) **dass** die zweite Crash-Strebe (14d) unmittelbar auf den Rahmen-Längsträgern (11, 12) aufliegt und die erste Crash-Strebe (14c) mittelbar über die Aufnahmeelemente (14a, 14b) und die zweite Crash-Strebe (14d) an den Rahmen-Längsträgern (11, 12) befestigt ist; und/oder
b) **dass** die Crash-Struktur (14), vorzugsweise in einem mittleren Bereich der ersten und zweiten Crash-Strebe (14c, 14d) angeordnete, Versteifungselemente (22) umfasst, welche die erste und zweite Crash-Strebe (14c, 14d), vorzugsweise vertikal, miteinander verbinden; und/oder
c) **dass** die erste Crash-Strebe (14c) in Bezug auf die zweite Crash-Strebe (14d) nach hinten versetzt angeordnet ist.

17. Nutzfahrzeug (10) nach einem der vorherigen Ansprüche, **dadurch gekennzeichnet, dass** die Crash-Struktur (14) eine, vorzugsweise räumschildförmige, Verkleidung (23) umfasst, aufweisend zwei in Richtung des Kühlmoduls (13) keilförmig auf eine Spitze zulaufende Scharbleche (23a, 23b), vorzugsweise um bei einem Aufprallereignis auf die Crash-Struktur (14) auftreffende Objekte von der Crash-Struktur (14) wegzulenken.

18. Nutzfahrzeug (10) nach Anspruch 17, **dadurch gekennzeichnet,**
a) **dass** die Verkleidung (23) nach hinten offen ist; und/oder
b) **dass** die Scharbleche (23a, 23b) nach hinten geneigt sind; und/oder
c) **dass** die Crash-Struktur (14) zwei U-förmige Träger (24a, 24b) umfasst, an welchen die Verkleidung (23) befestigt ist.

19. Nutzfahrzeug (10) nach einem der vorherigen Ansprüche, **dadurch gekennzeichnet, dass** die Crash-Struktur (14) in Form einer geschlossenen Kastenstruktur (25) ausgebildet ist, wobei die Kastenstruktur (25), vorzugsweise im Inneren der Kastenstruktur angeordnete, Verstärkungsstreben (19), vorzugsweise Schottbleche, zur Versteifung der Crash-Struktur (14) umfasst.

20. Nutzfahrzeug (10) nach Anspruch 19, **dadurch gekennzeichnet, dass** die geschlossene Kastenstruktur (25)
a) miteinander verschweißte Stahlbleche umfasst; und/oder
b) eine flache Boden- und/oder Deckplatte umfasst; und/oder
c) eine dem Kühlmodul (13) zugewandte Frontplatte (25a) umfasst, die eine Wölbung aufweist, und/oder
d) an den zwei Rahmen-Längsträgern (11, 12) verschraubt ist.

## Claims

1. A utility vehicle comprising a front structure (10), having
- two longitudinal frame support members (11, 12) each having a front end (11a, 12a);
- a cooling module (13) which is mounted at the respective front ends (11a, 12a) of the longitudinal frame support members (11, 12) and which extends transversely to the longitudinal frame support members (11, 12);
- a crash structure (14), preferably in the form of a bumper, which can be deformed in the event of an impact event, preferably in the event of a frontal impact, with reduction of impact forces, **characterised in that** the crash structure (14) extends above and transversely to the longitudinal frame support members (11, 12); and **in that** the crash structure (14) is arranged, preferably directly, behind the cooling module (13).

2. Utility vehicle (10) according to claim 1, **characterised in that** the cooling module (13) comprises an upper cooling module region (13a) which is arranged above the longitudinal frame support members (11, 12), and **in that** the crash structure (14) is arranged at least partially at the level of the upper cooling module region (13a).

3. Utility vehicle (10) according to any one of the preceding claims, **characterized in that** the cooling module (13) comprises at least one, preferably cuboid, cooler (131, 132), wherein the at least one cooler (131, 132)
a) is flowable through by a heat transfer medium, preferably gaseous and/or liquid; and/or
b) is oriented perpendicular to the two longitudinal frame members (11, 12); and/or
c) comprises a charge air cooler and/or a coolant cooler; and/or
d) comprises a front first cooler (131) and a rear second cooler (132), preferably arranged in a plane-parallel manner to the first cooler.

4. Utility vehicle (10) according to one of the previous claims, **characterised by** a high-voltage component, preferably a traction battery, for a battery-electric drive of the motor vehicle, wherein the high-voltage component is arranged behind the crash structure (14) and the crash structure (14) is a crash structure (14) for protecting the high-voltage component in the event of a frontal impact of the motor vehicle on a semi-trailer, preferably in the event of a frontal impact of the motor vehicle on a rear of a semi-trailer.

5. Utility vehicle (10) according to one of the previous claims, **characterised in that** the crash structure (14)
- comprises two receiving elements (14a, 14b), which are preferably designed as mirror images of one another and are each fastened to one of the frame longitudinal support members (11, 12); and
- comprises a, preferably curved, first crash strut (14c) with two, preferably mutually opposite, end portions (14c₁, 14c₂), wherein the end portions (14c₁, 14c₂) are each received in one of the two receiving elements (14a, 14b).

6. Utility vehicle (10) according to claim 5, **characterised in that** the first crash strut (14c) is configured as a, preferably square, hollow profile and/or is curved, wherein preferably the first crash strut (14c) is configured to be curved towards the cooling module (13).

7. Utility vehicle (10) according to one of claims 5 or 6, **characterised in that** at least one of the receiving elements (14a, 14b) is welded to the first crash strut (14c) and/or forms a common welded assembly together with the first crash strut (14c).

8. Utility vehicle (10) according to one of claims 5 to 7, **characterised in that** at least one of the receiving elements (14a, 14b) comprises a passage (15a, 15b) which comprises a profile corresponding to an outer profile of the first crash strut (14c) and in which the first crash strut (14c) is received, preferably in a form-fitting manner.

9. Utility vehicle (10) according to claim 8, **characterised in that** the first crash strut (14c) is displaceably guided in the passage (15a, 15b) in order thereby to enable a compensating movement of the first crash strut (14c) transversely to the longitudinal frame support members (11, 12) in the event of a crash-induced deformation of the first crash strut (14c).

10. Utility vehicle (10) according to claim 8 or 9, **characterised in that**
a) the at least one receiving element (14a, 14b) comprises an upwardly open U-profile (16), comprising two plane-parallel support legs (16a, 16b) and a centre part (16c) connecting the support legs to one another, wherein the centre part (16c) rests on one of the longitudinal frame support members (11, 12) and each of the support legs (16a, 16b) comprises an opening, wherein the openings of the support legs, which are preferably aligned with one another, form the passage (15a, 15b) of the at least one receiving element (14a, 14b); or
b) the at least one receiving element (14a, 14b) comprises a cassette (17) open on one side, preferably open on a side facing the cooling module (13), having two plane-parallel side parts (17a, 17b) which each comprise an opening, the openings of the side parts, which are preferably aligned with one another, forming the passage (15a, 15b) of the at least one receiving element (14a, 14b).

11. Utility vehicle (10) according to one of claims 5 to 10, **characterised in that** at least one of the receiving elements (14a, 14b) comprises a stepping (18), preferably on a side of the at least one receiving element facing the cooling module (13), the stepping (18) being formed in each case by
- a, preferably horizontal, stepped surface (18a) on which the first crash strut (14c) rests; and
- a, preferably vertical, impact surface (18b) against which the first crash strut (14c) rests, preferably flat.

12. Utility vehicle (10) according to one claim 11, **characterised in that** the first crash strut (14c) is held on the stepped surface of the at least one receiving element (14a, 14b) by means of a screw connection,
a) wherein the screw connection is configured to fail when a predetermined crash-induced force is applied, thereby enabling an equalising movement of the first crash strut (14c), preferably transversely to the longitudinal support members (11, 12) of the frame; and/or
b) wherein the screw connection comprises an elongated hole, preferably extending transversely to the longitudinal frame support members (11, 12), and a screw guided in the elongated hole, in order thereby to enable a compensating movement of the crash strut (14c), preferably transversely to the longitudinal frame support members (11, 12), in the event of a crash-induced deformation of the first crash strut (14c).

13. Utility vehicle (10) according to one of the claims 5 to 12, **characterised in that** at least one of the receiving elements (14a, 14b)
a) comprises reinforcing struts (19), preferably bulkhead plates, for stiffening the at least one receiving element (14a, 14b); and/or
b) comprises recesses (20), preferably circular recesses, for weight reduction; and/or
c) comprises a, preferably cantilevered, support plate (21), by means of which the at least one receiving element (14a, 14b) is mounted, preferably bolted, to the outside of one of the longitudinal support members (11, 12) of the frame; and/or
d) is configured to slope downwards towards the rear, preferably in the form of a ramp; and/or
e) is configured as an open profile, preferably a C-profile, wherein preferably the open profile side of the at least one receiving element (14a, 14b) is orientated towards the interior of the front-end structure (10).

14. Utility vehicle (10) according to one of claims 5 to 13, **characterised in that** the crash structure (14) further comprises a, preferably curved, second crash strut (14d), wherein preferably the first and second crash struts (14d) are arranged offset along a vertical axis of the front-end structure (10).

15. Utility vehicle (10) according to claim 14, **characterised in that** the first crash strut (14c), which is preferably configured in a U-shape, and the second crash strut (14d), which is preferably configured in a U-shape, are arranged offset plane-parallel to one another, preferably offset in height, and are connected to one another by means of the receiving elements (14a, 14b).

16. Utility vehicle (10) according to claim 14 or 15, **characterised in that**
a) the second crash strut (14d) rests directly on the longitudinal frame support members (11, 12) and the first crash strut (14c) is fastened indirectly to the longitudinal frame support members (11, 12) via the receiving elements (14a, 14b) and the second crash strut (14d); and/or
b) the crash structure (14) comprises stiffening elements (22), preferably arranged in a central portion of the first and second crash struts (14c, 14d), which connect the first and second crash struts (14c, 14d) to one another, preferably vertically; and/or
c) the first crash strut (14c) is arranged offset to the rear with respect to the second crash strut (14d).

17. Utility vehicle (10) according to one of the previous claims, **characterised in that** the crash structure (14) comprises a, preferably spatially shield-shaped, cladding (23) around the cooling module (13), comprising two scrapers (23a, 23b) which converge in a wedge shape towards a tip, preferably in order to deflect objects striking the crash structure (14) in the event of an impact away from the crash structure (14).

18. Utility vehicle (10) according to claim 17, **characterised in**
a) **that** the panelling (23) is open towards the rear; and/or
b) in that the skid plates (23a, 23b) are inclined rearwards; and/or
c) in that the crash structure (14) comprises two U-shaped supports (24a, 24b) to which the panelling (23) is fastened.

19. Utility vehicle (10) according to one of the previous claims, **characterised in that** the crash structure (14) is configured in the form of a closed box structure (25), wherein the box structure (25) comprises reinforcing struts (19), preferably arranged in the interior of the box structure, preferably bulkhead plates, for stiffening the crash structure (14).

20. Utility vehicle (10) according to claim 19, **characterised in that** the closed box structure (25)
a) comprises steel sheets welded together; and/or
b) comprises a flat bottom and/or top plate; and/or
c) comprises a front panel (25a) facing the cooling module (13), which comprises a curvature, and/or
d) is bolted to the two longitudinal support members (11, 12) of the frame.

## Revendications

1. Véhicule utilitaire comprenant une structure avant (10), comprenant :
- deux longerons de châssis (11, 12) ayant chacun une extrémité avant (11a, 12a) ;
- un module de refroidissement (13) qui est monté sur les extrémités avant respectives (11a, 12a) des longerons de châssis (11, 12) et qui s'étend transversalement par rapport aux longerons de châssis (11, 12) ;
- une structure de collision (14), de préférence en forme de butoir, qui peut se déformer lors d'un événement de collision, de préférence lors d'une collision frontale, en réduisant les forces de collision, **caractérisée en ce que** la structure de collision (14) s'étend au-dessus et transversalement par rapport aux longerons de châssis (11, 12) ;
et **en ce que** la structure de collision (14) est disposée, de préférence directement, derrière le module de refroidissement (13).

2. Véhicule utilitaire (10) selon la revendication 1, **caractérisé en ce que** le module de refroidissement (13) présente une zone supérieure de module de refroidissement (13a) qui est disposée au-dessus des longerons de châssis (11, 12), et **en ce que** la structure de collision (14) est disposée au moins partiellement à hauteur de la zone supérieure de module de refroidissement (13a).

3. Véhicule utilitaire (10) selon l'une des revendications précédentes, **caractérisé en ce que** le module de refroidissement (13) comprend au moins un radiateur (13₁, 13₂), de préférence parallélépipédique, ledit au moins un radiateur (13₁, 13-)
a) pouvant être traversé par un fluide caloporteur, de préférence gazeux et/ou liquide ; et/ou
b) étant orienté perpendiculairement aux deux longerons de châssis (11, 12) ; et/ou
c) comprenant un refroidisseur d'air de suralimentation et/ou un refroidisseur de liquide de refroidissement ; et/ou
d) comprenant un premier radiateur avant (13₁) et un deuxième radiateur arrière (13₂), de préférence disposé dans un plan parallèle au premier radiateur.

4. Véhicule utilitaire (10) selon l'une des revendications précédentes, **caractérisé par** un composant haute tension, de préférence une batterie de traction, pour un entraînement électrique par batterie du véhicule automobile, le composant haute tension étant disposé derrière la structure de collision (14) et la structure de collision (14) étant une structure de collision (14) destinée à protéger le composant haute tension en cas de collision frontale du véhicule automobile avec une semi-remorque, de préférence en cas de collision frontale du véhicule automobile avec l'arrière d'une semi-remorque.

5. Véhicule utilitaire (10) selon l'une des revendications précédentes, **caractérisé en ce que** la structure de collision (14)
- comprend deux éléments de réception (14a, 14b), de préférence symétriques l'un par rapport à l'autre, qui sont fixés chacun à l'un des longerons de châssis (11, 12) ; et
- comprend une première entretoise de collision (14c), de préférence incurvée, avec deux zones d'extrémité (14c₁, 14c₂), de préférence opposées l'une à l'autre, les zones d'extrémité (14c₁, 14c₂) étant reçues chacune dans l'un des deux éléments de réception (14a, 14b).

6. Véhicule utilitaire (10) selon la revendication 5, **caractérisé en ce que** la première entretoise de collision (14c) est réalisée sous forme de profilé creux, de préférence carré, et/ou est réalisée de manière incurvée, la première entretoise de collision (14c) étant de préférence réalisée de manière incurvée en direction du module de refroidissement (13).

7. Véhicule utilitaire (10) selon l'une des revendications 5 ou 6, **caractérisé en ce qu'**au moins un des éléments de réception (14a, 14b) est soudé à la première entretoise de collision (14c) et/ou forme un ensemble soudé commun avec la première entretoise de collision (14c).

8. Véhicule utilitaire (10) selon l'une des revendications 5 à 7, **caractérisé en ce qu'**au moins un des éléments de réception (14a, 14b) comprend un passage (15a, 15b) qui présente un profil correspondant à un profil extérieur de la première entretoise de collision (14c) et dans lequel la première entretoise de collision (14c) est reçue, de préférence par complémentarité de forme.

9. Véhicule utilitaire (10) selon la revendication 8, **caractérisé en ce que** la première entretoise de collision (14c) est guidée de manière coulissante dans le passage (15a, 15b) pour permettre ainsi, en cas de déformation de la première entretoise de collision (14c) due à une collision, un mouvement de compensation de la première entretoise de collision (14c) transversalement par rapport aux longerons de châssis (11, 12).

10. Véhicule utilitaire (10) selon la revendication 8 ou 9, **caractérisé en ce que**
a) l'au moins un élément de réception (14a, 14b) comprend un profilé en U (16) ouvert vers le haut, présentant deux branches de support (16a, 16b) planes et parallèles et une partie centrale (16c) reliant les branches de support entre elles, la partie centrale (16c) reposant sur l'un des longerons de châssis (11, 12) et chacune des branches de support (16a, 16b) présentant respectivement une ouverture, les ouvertures, de préférence alignées entre elles, des branches de support formant le passage (15a, 15b) de l'au moins un élément de réception (14a, 14b) ; ou
b) l'au moins un élément de réception (14a, 14b) comprend une cassette (17) ouverte d'un côté, de préférence ouverte sur un côté tourné vers le module de refroidissement (13), présentant deux parties latérales (17a, 17b) planes et parallèles, qui présentent chacune une ouverture, les ouvertures, de préférence alignées entre elles, des parties latérales formant le passage (15a, 15b) de l'au moins un élément de réception (14a, 14b).

11. Véhicule utilitaire (10) selon l'une des revendications 5 à 10, **caractérisé en ce qu'**au moins un des éléments de réception (14a, 14b) présente, de préférence sur un côté tourné vers le module de refroidissement (13) de l'au moins un élément de réception, un étagement (18), l'étagement (18) étant respectivement formé par
- une surface d'étagement (18a), de préférence horizontale, sur laquelle repose la première entretoise de collision (14c) ; et
- une surface de choc (18b), de préférence verticale, sur laquelle s'appuie, de préférence à plat, la première entretoise de collision (14c).

12. Véhicule utilitaire (10) selon l'une des revendications 11, **caractérisé en ce que** la première entretoise de collision (14c) est maintenue sur la surface d'étagement de l'au moins un élément de réception (14a, 14b) au moyen d'un assemblage vissé,
a) l'assemblage vissé étant conçu pour céder en cas d'application d'une force prédéterminée due à une collision, afin de permettre ainsi un mouvement de compensation de la première entretoise de collision (14c), de préférence transversalement par rapport aux longerons de châssis (11, 12) ; et/ou
b) l'assemblage vissé comprenant un trou oblong s'étendant de préférence transversalement aux longerons de châssis (11, 12) et une vis guidée dans le trou oblong, afin de permettre ainsi, en cas de déformation de la première entretoise de collision (14c) due à une collision, un mouvement de compensation de l'entretoise de collision (14c), de préférence transversalement aux longerons de châssis (11, 12).

13. Véhicule utilitaire (10) selon l'une des revendications 5 à 12, **caractérisé en ce qu'**au moins un des éléments de réception (14a, 14b)
a) comprend des entretoises de renforcement (19), de préférence des tôles de cloisonnement, pour rigidifier l'au moins un élément de réception (14a, 14b) ; et/ou
b) comprend des évidements (20), de préférence des évidements circulaires, pour réduire le poids ; et/ou
c) comprend une plaque de support (21), de préférence en saillie, au moyen de laquelle l'au moins un élément de réception (14a, 14b) est monté, de préférence vissé, latéralement à l'extérieur sur l'un des longerons de châssis (11, 12) ; et/ou
d) est conçu de manière inclinée vers l'arrière, de préférence en forme de rampe ; et/ou
e) est conçu comme un profilé ouvert, de préférence un profilé en C, le côté de profilé ouvert de l'au moins un élément de réception (14a, 14b) étant de préférence orienté vers l'intérieur de la structure avant (10).

14. Véhicule utilitaire (10) selon l'une des revendications 5 à 13, **caractérisé en ce que** la structure de collision (14) comprend en outre une deuxième entretoise de collision (14d), de préférence incurvée, les première et deuxième entretoises de collision (14d) étant de préférence disposées de manière décalée le long d'un axe vertical de la structure avant (10).

15. Véhicule utilitaire (10) selon la revendication 14, **caractérisé en ce que** la première entretoise de collision (14c), de préférence en forme de U, et la deuxième entretoise de collision (14d), de préférence en forme de U, sont décalées l'une par rapport à l'autre dans un plan parallèle, de préférence décalées en hauteur, et sont reliées entre elles au moyen des éléments de réception (14a, 14b).

16. Véhicule utilitaire (10) selon la revendication 14 ou 15, **caractérisé en ce que**
a) la deuxième entretoise de collision (14d) repose directement sur les longerons de châssis (11, 12) et la première entretoise de collision (14c) est fixée indirectement par l'intermédiaire des éléments de réception (14a, 14b) et la deuxième entretoise de collision (14d) aux longerons de châssis (11, 12) ; et/ou
b) la structure de collision (14) comprend des éléments de raidissement (22), de préférence disposés dans une zone centrale de la première et de la deuxième entretoise de collision (14c, 14d), qui relient entre elles, de préférence verticalement, la première et la deuxième entretoise de collision (14c, 14d) ; et/ou
c) **en ce que** la première entretoise de collision (14c) est disposée de manière décalée vers l'arrière par rapport à la deuxième entretoise de collision (14d).

17. Véhicule utilitaire (10) selon l'une des revendications précédentes, **caractérisé en ce que** la structure de collision (14) comprend un revêtement (23), de préférence en forme de lame de déblayage, présentant deux tôles de soc (23a, 23b) aux extrémités cunéiformes convergeant en pointe en direction du module de refroidissement (13), de préférence pour dévier les objets entrant en collision avec la structure de collision (14) de sorte à les éloigner de la structure de collision (14) lors d'un événement de collision.

18. Véhicule utilitaire (10) selon la revendication 17, **caractérisé en ce que**
a) le revêtement (23) est ouvert vers l'arrière ; et/ou
b) les tôles de soc (23a, 23b) sont inclinées vers l'arrière ; et/ou
c) la structure de collision (14) comprend deux supports (24a, 24b) en forme de U, sur lesquels est fixé le revêtement (23).

19. Véhicule utilitaire (10) selon l'une des revendications précédentes, **caractérisé en ce que** la structure de collision (14) est réalisée sous la forme d'une structure en caisson fermé (25), la structure en caisson (25) comprenant des entretoises de renforcement (19), de préférence des tôles de cloisonnement, disposées de préférence à l'intérieur de la structure en caisson, pour rigidifier la structure de collision (14).

20. Véhicule utilitaire (10) selon la revendication 19, **caractérisé en ce que** la structure en caisson fermé (25)
a) comprend des tôles d'acier soudées entre elles ; et/ou
b) comprend une plaque de fond et/ou de couverture plate ; et/ou
c) comprend une plaque frontale (25a) tournée vers le module de refroidissement (13), qui présente une courbure, et/ou
d) est vissée sur les deux longerons du châssis (11, 12).
